(19) Europäisches Patentamt
European Patent Office
Office européen des brevets

(11) **EP 4 467 589 A1**

(12) **EUROPEAN PATENT APPLICATION**
published in accordance with Art. 153(4) EPC

(43) Date of publication:
**27.11.2024  Bulletin 2024/48**

(51) International Patent Classification (IPC):
**C08G 63/91** (2006.01)    **C08G 63/06** (2006.01)
**C08L 67/04** (2006.01)

(21) Application number: **22922246.8**

(22) Date of filing: **28.12.2022**

(52) Cooperative Patent Classification (CPC):
**C08G 63/06; C08G 63/91; C08L 67/04**

(86) International application number:
**PCT/JP2022/048664**

(87) International publication number:
**WO 2023/140096 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.01.2022  JP 2022007157**

(71) Applicant: **Kaneka Corporation
Osaka-shi, Osaka 530-8288 (JP)**

(72) Inventor: **SUNAGAWA, Takenobu
Settsu-shi, Osaka 566-0072 (JP)**

(74) Representative: **Vossius & Partner
Patentanwälte Rechtsanwälte mbB
Siebertstrasse 3
81675 München (DE)**

(54) **MODIFIED ALIPHATIC POLYESTER-BASED RESIN AND COMPOSITION OR MOLDED BODY THEREOF**

(57)    A modified aliphatic polyester resin includes a poly(3-hydroxyalkanoate) resin. A ratio between a melt viscosity (Pa•s) and a drawdown time (sec) is from $2.0 \times 10^{-2}$ to $5.0 \times 10^{-1}$ (sec/[Pa•s]), and a z-average molecular weight/weight-average molecular weight ratio is less than 10.

Fig.1

GPC retention time [min]

## Description

### Technical Field

The present invention relates to a modified aliphatic polyester resin including a poly(3-hydroxyalkanoate) resin and also relates to a composition or molded article containing the modified aliphatic polyester resin.

### Background Art

In recent years, waste plastics have caused an adverse impact on the global environment, for example, by affecting ecosystems, emitting hazardous gases during combustion, or generating a huge amount of combustion heat which contributes to global warming. As materials that can be a solution to this problem, biodegradable plastics are under active development.

Biodegradable plastics, in particular aliphatic polyester resins, that are microbially produced using a plant-derived material as a carbon source are attracting attention in terms of biodegradability and carbon neutrality. Among the aliphatic polyester resins, poly(3-hydroxyalkanoate) resins such as poly(3-hydroxybutyrate) homopolymer resin, poly(3-hydroxybutyrate-co-3-hydroxyvalerate) copolymer resin, poly(3-hydroxybutyrate-co-3-hydroxyhexanoate) copolymer resin, and poly(3-hydroxybutyrate-co-4-hydroxybutyrate) copolymer resin are the focus of attention.

In general, the poly(3-hydroxyalkanoate) resins, in particular poly(3-hydroxyalkanoate) copolymer resins, have low processability in melt molding. In the context of this problem, Patent Literature 1 discloses a technique in which a polyhydroxyalkanoate resin is melted in the presence of a small amount of free radical initiator at a temperature equal to or higher than a decomposition temperature of the initiator to link the molecules of the polyhydroxyalkanoate to one another and obtain a branched polyhydroxyalkanoate.

However, the method disclosed in Patent Literature 1 has difficulty stably performing a molding process such as blown film molding or extrusion blow molding under practical process conditions. A technique for solving this problem is disclosed in Patent Literature 2 or 3. According to this technique, a poly(3-hydroxyalkanoate) resin and an organic peroxide are melted and kneaded to obtain a poly(3-hydroxyalkanoate) resin with properties controlled so that a ratio between an apparent melt viscosity and a drawdown time satisfies a specific relationship, and the use of the obtained poly(3-hydroxyalkanoate) resin allows a molding process to be stably performed under practical process conditions.

### Citation List

### Patent Literature

PTL 1: U.S. Patent No. 6,201,083
PTL 2: WO 2019/022008
PTL 3: Japanese Laid-Open Patent Application Publication No. 2020-122062

### Summary of Invention

### Technical Problem

Although with the technique described in Patent Literature 2 or 3 a molding process can be stably performed using a poly(3-hydroxyalkanoate) resin under practical process conditions, the resulting molded article contains an increased amount of minute foreign materials.

In view of the above circumstances, the present invention aims to provide: a modified aliphatic polyester resin that includes a poly(3-hydroxyalkanoate) resin and the use of which allows a molding process to be stably performed under practical process conditions and can reduce the occurrence of foreign materials in the resulting molded article; and a composition and a molded article of the modified aliphatic polyester resin.

### Solution to Problem

As a result of intensive studies with the goal of solving the above problem, the present inventors have found that the modified poly(3-hydroxyalkanoate) resin as described in Patent Literature 2 or 3 contains a high-molecular-weight component resulting from the modification. Further, the present inventors have succeed in decreasing the amount of the high-molecular-weight component in the modified poly(3-hydroxyalkanoate) resin as described in Patent Literature 2 or 3 while maintaining the specific relationship satisfied by the ratio between the melt viscosity and the drawdown time, and have found that molding of the modified poly(3-hydroxyalkanoate) resin containing a decreased amount of high-molecular-weight component can produce a molded article with a reduced amount of foreign materials. Based on these findings, the inventors have completed the present invention.

Specifically, the present invention relates to a modified aliphatic polyester resin (A) including a poly(3-hydroxyalkanoate) resin, wherein

a ratio between a melt viscosity (Pa•s) and a drawdown time (sec) is from $2.0 \times 10^{-2}$ to $5.0 \times 10^{-1}$ (sec/[Pa•s]),
a z-average molecular weight/weight-average molecular weight ratio is less than 10,
the melt viscosity is an apparent melt viscosity ($\eta$) calculated by the following equation (1) using a load (F) measured with a capillary rheometer during extrusion in which a melt of the modified aliphatic polyester resin (A) is extruded at a volume flow rate (Q) of 0.716 cm³/min and a shear rate of 122 sec⁻¹ from an orifice having a radius (d) of 0.05 cm and a capillary length (1) of 1 cm and connected to a tip of a barrel having a barrel set temperature of 170°C and a radius (D) of 0.4775 cm:

$$(\text{Equation } 1) \quad \eta = \frac{\pi \left( F/_{\pi D^2} \right) d^4}{8Ql} \quad,$$

and
the drawdown time is a time taken for the modified aliphatic polyester resin (A) to fall 20 cm after being discharged from the orifice in measurement of the melt viscosity.

## Advantageous Effects of Invention

The present invention can provide: a modified aliphatic polyester resin that includes a poly(3-hydroxyalkanoate) resin and the use of which allows a molding process to be stably performed under practical process conditions and can reduce the occurrence of foreign materials in the resulting molded article; and a composition and a molded article of the modified aliphatic polyester resin.

According to a preferred aspect of the present invention, when molding such as extrusion molding, extrusion blow molding, injection blow molding, blown film molding, vacuum molding, or injection molding is performed using a poly(3-hydroxyalkanoate) resin, a wide range of temperature conditions can be used, the molding process can be accomplished stably, and a molded article having a relatively uniform thickness or weight and having a good appearance can be produced. Additionally, such molded articles can be mass-produced at a high speed.

The modified aliphatic polyester resin according to the present invention can be used as an additive to be added to an unmodified poly(3-hydroxyalkanoate) resin. The use of a resin composition containing the modified aliphatic polyester resin and the unmodified poly(3-hydroxyalkanoate) resin allows a molding process to be performed stably under practical process conditions and can reduce the occurrence of foreign materials in the resulting molded article.

Furthermore, the modified aliphatic polyester resin according to the present invention can be produced at a relatively low temperature without heating to the melting temperature of the resin. This can save the energy consumed in the production process and prevent deterioration of the resin during the production process.

## Brief Description of Drawings

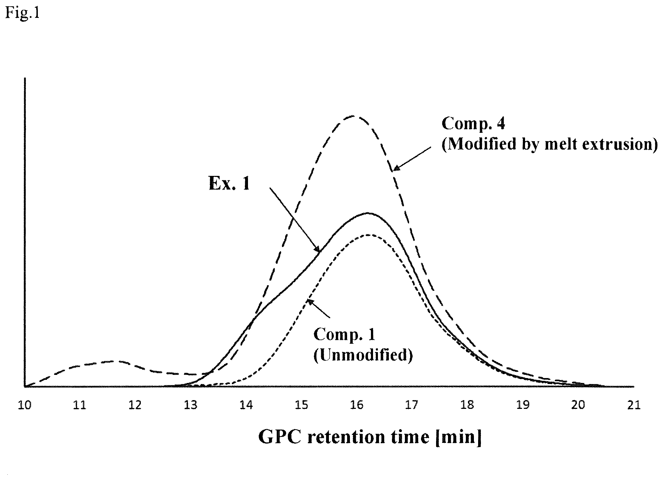

FIG. 1 shows GPC charts obtained for Example 1, Comparative Example 1, and Comparative Example 4.

## Description of Embodiments

Hereinafter, an embodiment of the present invention will be described. The present invention is not limited to the embodiment described below.

[Modified Aliphatic Polyester Resin]

A modified aliphatic polyester resin according to a first aspect of the present embodiment includes a poly(3-hydroxyalkanoate) resin as an essential component. The modified aliphatic polyester resin is a resin which has been modified so that a ratio between a melt viscosity and a drawdown time is within a given range and in which a z-average molecular weight/weight-average molecular weight ratio is less than 10.

<Poly(3-Hydroxyalkanoate) Resin>

The poly(3-hydroxyalkanoate) resin is a polyhydroxyalkanoate which is a biodegradable aliphatic polyester (preferably a polyester containing no aromatic ring) and which contains 3-hydroxyalkanoic acid repeating units represented by the formula [-CHR-CH$_2$-CO-O-] (wherein R is an alkyl group represented by C$_n$H$_{2n+1}$ and n is an integer from 1 to 15) as essential repeating units. The poly(3-hydroxyalkanoate) resin may be hereinafter referred to as "P3HA". The P3HA preferably contains 50 mol% or more, more preferably 70 mol% or more, of the 3-hydroxyalkanoic acid repeating units in total monomer repeating units (100 mol%).

Examples of the P3HA include, but are not limited to, poly(3-hydroxybutyrate) abbreviated as P3HB, poly(3-hydroxybutyrate-co-3-hydroxyvalerate) abbreviated as P3HB3HV, poly(3-hydroxybutyrate-co-3-hydroxyhexanoate) abbreviated as P3HB3HH, poly(3-hydroxybutyrate-co-3-hydroxyvalerate-co-3-hydroxyhexanoate) abbreviated as P3HB3HV3HH, poly(3-hydroxybutyrate-co-4-hydroxybutyrate) abbreviated as P3HB4HB, poly(3-hydroxybutyrate-co-3-hydroxyoctanoate), and poly(3-hydroxybutyrate-co-3-hydroxydecanoate).

The P3HA can be microbially produced. Such a microbially produced P3HA is typically a P3HA consisting only of D- (R-) hydroxyalkanoic acid repeating units. Among microbially produced P3HAs, P3HB, P3HB3HH, P3HB3HV, P3HB3HV3HH, and P3HB4HB are preferred since they are easy to industrially produce. P3HB, P3HB3HH, P3HB3HV, and P3HB4HB are more preferred and P3HB3HH is particularly preferred.

In the case where the P3HA (in particular microbially produced P3HA) contains 3-hydroxybutyric acid (3HB) repeating units, it is preferable, in terms of the balance between flexibility and strength, that the monomer proportions in the P3HA be such that the proportion of the 3HB repeating units is from 80 to 99 mol% and more preferably from 85 to 97 mol% in total monomer repeating units (100 mol%). When the proportion of the 3HB repeating units is 80 mol% or more, the P3HA is likely to have enhanced stiffness. In addition, the P3HA is likely to be easily purified since its crystallinity is not extremely low. When the proportion of the 3HB repeating units is 99 mol% or less, the P3HA is likely to have enhanced flexibility. The monomer proportions in the P3HA can be measured by a method such as gas chromatography (see WO 2014/020838, for example).

The microorganism for producing the P3HA is not limited to a particular type and may be any microorganism having a P3HA-producing ability. The first example of P3HB-producing bacteria is *Bacillus megaterium* discovered in 1925, and other examples include naturally occurring microorganisms such as *Cupriavidus necator* (formerly classified as *Alcaligenes eutrophus* or *Ralstonia eutropha*) and *Alcaligenes latus.* These microorganisms accumulate P3HB in their cells.

Known examples of bacteria that produce copolymers of 3HB with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase the P3HB3HH productivity, *Alcaligenes eutrophus* AC32 (FERM BP-6038; see T. Fukui, Y. Doi, J. Bacteriol., 179, pp. 4821-4830 (1997)) having a P3HA synthase gene introduced is preferred. Such a microorganism is cultured under suitable conditions to allow the microorganism to accumulate a P3HA in its cells, and the microbial cells accumulating the P3HA are used. Instead of the above microorganism, a genetically modified microorganism having any suitable P3HA synthesis-related gene introduced may be used depending on the P3HA to be produced. The culture conditions including the type of the substrate may be optimized depending on the P3HA to be produced.

The molecular weight of the P3HA is not limited to a particular range and may be any value as long as the P3HA exhibits physical properties substantially sufficient for the intended use. The weight-average molecular weight of the P3HA is preferably from 50,000 to 3,000,000, more preferably from 100,000 to 1,000,000, and even more preferably from 300,000 to 700,000. When the weight-average molecular weight is 50,000 or more, a molded article containing the P3HA is likely to have enhanced strength. When the weight-average molecular weight is 3,000,000 or less, the P3HA is likely to have improved processability and be easier to mold. Although the P3HA is a modified resin, the above-mentioned values of the weight-average molecular weight are those measured before modification of the P3HA.

The weight-average molecular weight of the modified P3HA is preferably from 50,000 to 3,000,000, more preferably from 100,000 to 1,000,000, and even more preferably from 300,000 to 700,000. When the weight-average molecular weight of the modified P3HA is 50,000 or more, a molded article containing the modified P3HA is likely to have enhanced strength. When the weight-average molecular weight of the modified P3HA is 3,000,000 or less, the modified P3HA is likely to have improved processability and be easier to mold.

The weight-average molecular weight can be determined as a polystyrene-equivalent molecular weight measured by gel permeation chromatography (GPC; "High-performance liquid chromatograph 20A system" manufactured by Shimadzu Corporation) using polystyrene gels ("K-G 4A" and "K-806M" manufactured by Showa Denko K.K.) as columns and chloroform as a mobile phase. In this chromatography, calibration curves are created using polystyrenes having weight-average molecular weights of 31,400, 197,000, 668,000, and 1,920,000. The columns used in the GPC may be any columns suitable for measurement of the molecular weight.

The modified aliphatic polyester resin according to the present embodiment may include one P3HA or two or more P3HAs.

The modified aliphatic polyester resin according to the present embodiment includes a modified P3HA. The term "modified" means that the molecules of the P3HA have a branched structure. The branched structure can be formed as a result of the P3HA molecules being linked directly to one another through a reaction of the P3HA with radicals generated by decomposition of a peroxide described later. The modified P3HA can exhibit a longer drawdown time and a higher melt tension than the P3HA that has not been modified.

The modified aliphatic polyester resin according to the present embodiment is a resin in which a ratio between an apparent melt viscosity (Pa•s) and a drawdown time (sec) (this ratio may be hereinafter referred to as "drawdown time/melt viscosity ratio") is from $2.0 \times 10^{-2}$ to $5.0 \times 10^{-1}$ (sec/[Pa•s]). The fact that the modified aliphatic polyester resin exhibits a drawdown time/melt viscosity ratio within the above range means that the resin has a suitable balance of melt viscosity and melt tension for various molding methods. Since the modified aliphatic polyester resin exhibits a drawdown time/melt viscosity ratio as indicated above, the use of the modified aliphatic polyester resin allows a molding process to be stably performed under practical process conditions.

To control the drawdown time/melt viscosity ratio of the modified aliphatic polyester resin within the above range, the resin is preferably an aliphatic polyester resin modified uniformly and moderately. As described later, the modified aliphatic polyester resin can be obtained by modifying an unmodified aliphatic polyester resin using a peroxide in an aqueous dispersion.

The drawdown time/melt viscosity ratio of the modified aliphatic polyester resin according to the present embodiment is preferably from $2.0 \times 10^{-2}$ to $1.0 \times 10^{-1}$ (sec/[Pa•s]) and more preferably from $2.0 \times 10^{-2}$ to $8.0 \times 10^{-2}$ (sec/[Pa•s]). The drawdown time/melt viscosity ratio may be at least $2.5 \times 10^{-2}$ (sec/[Pa•s]) or at least $3.0 \times 10^{-2}$ (sec/[Pa•s]). The drawdown time/melt viscosity ratio may be at most $7.0 \times 10^{-2}$ (sec/[Pa•s]) or at most $6.0 \times 10^{-2}$ (sec/[Pa•s]).

The melt viscosity is an apparent melt viscosity, which is defined as follows.

Melt viscosity: An apparent melt viscosity ($\eta$) calculated by the following equation (1) using a load (F) measured with a capillary rheometer during extrusion in which a melt of the resin is extruded at a volume flow rate (Q) of 0.716 cm³/min and a shear rate of 122 sec$^{-1}$ from an orifice having a radius (d) of 0.05 cm and a capillary length (1) of 1 cm and connected to a tip of a barrel having a barrel set temperature of 170°C and a radius (D) of 0.4775 cm.

[Math 1]

$$(\text{Equation } 1) \quad \eta = \frac{\pi \left( F/_{\pi D^2} \right) d^4}{8Ql}$$

The melt viscosity of the modified aliphatic polyester resin according to the present embodiment is not limited to a particular range but is preferably from 500 to 3000 (Pa•s), more preferably from 800 to 2900 (Pa•s), and even more preferably from 1000 to 2800 (Pa•s). Controlling the melt viscosity within the range of 500 to 3000 (Pa•s) offers the following advantage: in an aspect where the modified aliphatic polyester resin is used in combination with an unmodified P3HA (B) described later, the resin mixture can be stably molded by any of various molding methods under practical process conditions regardless of the amount of the modified aliphatic polyester resin, and a molded article containing few foreign materials and having good surface properties can be produced.

The melt viscosity may be at least 1500 (Pa•s) or at least 2000 (Pa•s).

When the modified aliphatic polyester resin according to the present embodiment is produced by a method using a peroxide, the melt viscosity of the modified aliphatic polyester resin can be controlled within the range as mentioned above by adjusting the amount of the peroxide, the conditions in the modification, the molecular weight of the P3HA used, etc.

The drawdown time of the modified aliphatic polyester resin according to the present embodiment is defined as follows.

Drawdown time: A time taken for the resin to fall 20 cm after being discharged from the orifice in measurement of the melt viscosity.

The drawdown time of the modified aliphatic polyester resin according to the present embodiment is not limited to a particular range but is preferably from 30 to 200 (sec), more preferably from 35 to 190 (sec), and even more preferably from 40 to 180 (sec). Controlling the drawdown time within the range of 30 to 200 (sec) offers the following advantage: in an aspect where the modified aliphatic polyester resin is used in combination with an unmodified P3HA (B) described later, the resin mixture can be stably molded by any of various molding methods under practical process conditions regardless of the amount of the modified aliphatic polyester resin, and a molded article containing few foreign materials and having good surface properties can be produced.

The drawdown time may be at least 50 (sec) or at least 60 (sec). The drawdown time may be at most 150 (sec) or at most 100 (sec).

When the modified aliphatic polyester resin according to the present embodiment is produced by a method using a peroxide, the drawdown time of the modified aliphatic polyester resin can be controlled within the range as mentioned above by adjusting the amount of the peroxide, the conditions in the modification, the molecular weight of the P3HA used, etc.

The modified aliphatic polyester resin according to the present embodiment is a resin in which a z-average molecular weight/weight-average molecular weight ratio is less than 10. The use of the aliphatic polyester resin having such a low z-average molecular weight/weight-average molecular weight ratio can reduce the occurrence of foreign materials in a molded article containing the resin. The z-average molecular weight/weight-average molecular weight ratio is preferably less than 10, more preferably less than 5, and even more preferably less than 3 and may be less than 2.5. The lower limit of the z-average molecular weight/weight-average molecular weight ratio is not limited to a particular value, and the z-average molecular weight/weight-average molecular weight ratio is 1 or more and preferably 1.5 or more.

Both the weight-average molecular weight (Mw) and the z-average molecular weight (Mz) are determined by GPC analysis. The Mw is a weighted average calculated by using the molecular weight as a weight, and the Mz is a weighted average calculated by using the square of the molecular weight as a weight. Thus, the Mz is more affected by the presence of a high-molecular-weight component than the Mw, and the higher the high-molecular-weight component content is, the greater the Mz is. Hence, a low value of the z-average molecular weight/weight-average molecular weight ratio indicates that the high-molecular-weight component content is relatively low.

The modified aliphatic polyester resin meeting the above-described requirement concerning the drawdown time/melt viscosity ratio and having a z-average molecular weight/weight-average molecular weight ratio of less than 10 can be produced, as described below, by modifying an unmodified aliphatic polyester resin using a peroxide in an aqueous dispersion. With the use of the method as described in Patent Literature 2 or 3, in which a P3HA is modified by melting and kneading the P3HA in the presence of a peroxide, it is difficult to produce a modified aliphatic polyester resin having a low z-average molecular weight/weight-average molecular weight ratio. This is presumably because a branching reaction of the resin takes place locally during the melting and kneading and this local branching reaction tends to produce a high-molecular-weight component.

The modified aliphatic polyester resin according to the present embodiment may have a gel fraction of 0 to 10%. The use of the aliphatic polyester resin having such a low gel fraction can further reduce the occurrence of foreign materials in a molded article containing the resin. The gel fraction may be from 0 to 8%, may be from 0 to 6%, or may be from 0 to 5%. The lower limit of the gel fraction is not limited to a particular value, and the gel fraction may be 1.6% or more or may be 1.8% or more.

The gel fraction is measured as follows. An amount of 0.4 g of resin sample is dissolved in 100 ml of chloroform at 60°C over 24 hours, and the resulting solution is centrifuged by means of a centrifuge at a rotational speed of 30000 rpm for 1 hour to separate insoluble matter and soluble matter from each other. The weights of the insoluble matter and the soluble matter are used to calculate the gel fraction by the following equation.

Gel fraction (%) = {(weight of chloroform-insoluble matter)/(weight of chloroform-insoluble matter + weight of chloroform-soluble matter)} $\times$ 100

The modified aliphatic polyester resin having such a low gel fraction can be produced, as described later, by modifying an unmodified aliphatic polyester resin using a peroxide in an aqueous dispersion. With the use of the method as described in Patent Literature 2 or 3, in which a P3HA is modified by melting and kneading the P3HA in the presence of a peroxide, the modified aliphatic polyester resin produced has a relatively high gel fraction.
This is presumably because a branching reaction of the resin takes place locally during the melting and kneading and this local branching reaction tends to produce a gel (insoluble portion).

The modified aliphatic polyester resin according to the present embodiment is an unfoamed resin unlike foamed resin particles as disclosed in WO 2019/146555 or WO 2021/002092 and is preferably a resin substantially free of internal bubbles.

Since the modified aliphatic polyester resin according to the present embodiment is not foamed, the modified aliphatic polyester resin has a relatively high density. The density is preferably more than 0.3 g/cm$^3$, more preferably 0.5 g/cm$^3$ or more, and even more preferably 0.7 g/cm$^3$ or more. The upper limit of the density is not limited to a particular value, and the density may be 1.6 g/cm$^3$ or less or may be 1.4 g/cm$^3$ or less. The density of the resin can be determined by a method as described in JIS K 0061 (Test methods for density and relative density of chemical products) or a method as described in JIS Z 8807 (Methods of measuring density and specific gravity of solid).

The modified aliphatic polyester resin according to the present embodiment is not limited to taking a particular form and may be in the form of powder or pellets. The modified aliphatic polyester resin is preferably in the form of powder in terms of easiness with which the modified aliphatic polyester resin is collected from an aqueous dispersion or mixed with an unmodified resin described later.

<Method for Producing Modified Aliphatic Polyester Resin>

An example of the method for producing the modified aliphatic polyester resin according to the present embodiment will be specifically described. The modified aliphatic polyester resin according to the present embodiment can be produced by modifying a P3HA in the presence of a peroxide in an aqueous dispersion. To efficiently modify the P3HA, a peroxide-containing aqueous dispersion of the P3HA is preferably heated to a temperature suitable for the modification.

The production method is a method in which a P3HA and a peroxide are reacted in an aqueous dispersion containing the P3HA and the peroxide, and is different from a suspension polymerization method in which a monomer is polymerized in the presence of a peroxide. The P3HA-containing aqueous dispersion in the present embodiment is preferably free of any monomer used as a raw material in suspension polymerization.

More specifically, the modified aliphatic polyester resin production method preferably includes the steps of: (1) dispersing a P3HA in water to obtain an aqueous P3HA dispersion containing the P3HA; (2) adding a peroxide to the aqueous P3HA dispersion to impregnate the P3HA with the peroxide; and (3) heating the aqueous P3HA dispersion containing the added peroxide to a heating temperature to modify the P3HA. More preferably, the method further includes the step (4) of maintaining the heating temperature after adding all of the peroxide.

In the step (1), the aqueous P3HA dispersion can be prepared by adding the P3HA in the form of powder or pellets into water. The aqueous P3HA dispersion may be obtained by culturing a P3HA-producing microorganism to accumulate the P3HA in the cells of the microorganism, then disrupting the cells, and separating cellular components from the P3HA. The P3HA concentration in the aqueous dispersion is not limited to a particular range and can be set as appropriate. For example, the P3HA concentration may be from about 1 to about 70 wt% and is preferably from about 5 to about 50 wt%.

In the step (2), the peroxide is added to the aqueous P3HA dispersion obtained in the step (1) to impregnate the P3HA with the peroxide. The peroxide may be added at one time or may be added continuously or in batches. In terms of uniform modification of the P3HA, it is preferable to add the peroxide continuously or in batches.

<Peroxide>

The peroxide may be an organic peroxide or an inorganic peroxide. In terms of high increasing effect on the drawdown time, the peroxide is preferably an organic peroxide.

In view of conditions such as the heating temperature and the time in the modification, the organic peroxide used is preferably at least one selected from the group consisting of a diacyl peroxide, an alkyl peroxyester, a dialkyl peroxide, a hydroperoxide, a peroxyketal, a peroxycarbonate, and a peroxydicarbonate.

Specific examples of such an organic peroxide include butyl peroxyneododecanoate, octanoyl peroxide, dilauroyl peroxide, succinic peroxide, a mixture of toluoyl peroxide and benzoyl peroxide, benzoyl peroxide, bis(butylperoxy)trimethylcyclohexane, butyl peroxylaurate, dimethyl di(benzoylperoxy)hexane, bis(butylperoxy)methylcyclohexane, bis(butylperoxy)cyclohexane, butyl peroxybenzoate, butyl bis(butylperoxy)valerate, dicumyl peroxide, di-*t*-hexyl peroxide, *t*-butyl peroxy-2-ethylhexanoate, *t*-butyl peroxyisobutyrate, *t*-butyl peroxypivalate, *t*-hexyl peroxypivalate, *t*-butylperoxymethyl monocarbonate, *t*-pentylperoxymethyl monocarbonate, *t*-hexylperoxymethyl monocarbonate, *t*-heptylperoxymethyl monocarbonate, *t*-octylperoxymethyl monocarbonate, 1,1,3,3-tetramethylbutylperoxymethyl monocarbonate, *t*-butylperoxyethyl monocarbonate, *t*-pentylperoxyethyl monocarbonate, *t*-hexylperoxyethyl monocarbonate, *t*-heptylperoxyethyl monocarbonate, *t*-octylperoxyethyl monocarbonate, 1,1,3,3-tetramethylbutylperoxyethyl monocarbonate, t-butylperoxy-*n*-propyl monocarbonate, *t*-pentylperoxy-*n*-propyl monocarbonate, *t*-hexylperoxy-*n*-propyl monocarbonate, *t*-heptylperoxy-*n*-propyl monocarbonate, *t*-octylperoxy-*n*-propyl monocarbonate, 1,1,3,3-tetramethylbutylperoxy-*n*-propyl monocarbonate, *t*-butylperoxyisopropyl monocarbonate, *t*-pentylperoxyisopropyl monocarbonate, *t*-hexylperoxyisopropyl monocarbonate, *t*-heptylperoxyisopropyl monocarbonate, *t*-octylperoxyisopropyl monocarbonate, 1,1,3,3-tetramethylbutylperoxyisopropyl monocarbonate, *t*-butylperoxy-*n*-butyl monocarbonate, *t*-pentylperoxy-*n*-butyl monocarbonate, *t*-hexylperoxy-*n*-butyl monocarbonate, *t*-heptylperoxy-*n*-butyl monocarbonate, *t*-octylperoxy-*n*-butyl monocarbonate, 1,1,3,3-tetramethylbutylperoxy-*n*-butyl monocarbonate, *t*-butylperoxyisobutyl monocarbonate, *t*-pentylperoxyisobutyl monocarbonate, *t*-hexylperoxyisobutyl monocarbonate, *t*-heptylperoxyisobutyl monocarbonate, *t*-octylperoxyisobutyl monocarbonate, 1,1,3,3-tetramethylbutylperoxyisobutyl monocarbonate, *t*-butylperoxy-*sec*-butyl monocarbonate, *t*-pentylperoxy-*sec*-butyl monocarbonate, *t*-hexylperoxy-*sec*-butyl monocarbonate, *t*-heptylperoxy-*sec*-butyl monocarbonate, *t*-octylperoxy-*sec*-butyl monocarbonate, 1,1,3,3-tetramethylbutylperoxy-*sec*-butyl monocarbonate, *t*-butylperoxy-*t*-butyl monocarbonate, *t*-pentylperoxy-*t*-butyl monocarbonate, *t*-hexylperoxy-*t*-butyl monocarbonate, *t*-heptylperoxy-*t*-butyl monocarbonate, *t*-octylperoxy-*t*-butyl monocarbonate, 1,1,3,3-tetramethylbutylperoxy-*t*-butyl monocarbonate, *t*-butylperoxy-2-ethylhexyl monocarbonate, *t*-pentylperoxy-2-ethylhexyl monocarbonate, *t*-hexylperoxy-2-ethylhexyl monocarbonate, *t*-heptylperoxy-2-ethylhexyl monocarbonate, *t*-octylperoxy-2-ethylhexyl monocarbonate, 1,1,3,3-tetramethylbutylperoxy-2-ethylhexyl monocarbonate, diisobutyl peroxide, cumyl peroxyneodecanoate, di-*n*-propyl peroxydicarbonate, diisopropyl peroxydicarbonate, di-*sec*-butyl peroxydicarbonate, 1,1,3,3-tetramethylbutyl peroxyneodecanoate, bis(4-*t*-butylcyclohexyl) peroxydicarbonate, bis(2-ethylhexyl) peroxydicarbonate, *t*-hexyl peroxyneodecanoate, *t*-butyl peroxyneodecanoate, *t*-butyl peroxyneoheptanoate, *t*-hexyl peroxypivalate, *t*-butyl peroxypivalate, di(3,5,5-trimethylhexanoyl) peroxide, dilauroyl peroxide, 1,1,3,3-tetramethylbutyl peroxy-2-ethylhexanoate, disuccinic acid peroxide, 2,5-dimethyl-2,5-bis(2-ethylhexanoylperoxy)hexane, *t*-hexyl peroxy-2-ethylhexanoate, di(4-methylbenzoyl) peroxide, dibenzoyl peroxide, *t*-butylperoxy-2-ethylhexyl carbonate, *t*-butylperoxyisopropyl carbonate, 1,6-bis(*t*-butylperoxycarbonyloxy)hexane, *t*-butyl peroxy-3,5,5-trimethylhexanoate, *t*-butyl peroxyacetate, *t*-butyl peroxybenzoate, *t*-amyl peroxy-3,5,5-trimethylhexanoate, 2,2-bis(4,4-di-*t*-butylperoxycyclohexyl)propane, and 2,2-di-*t*-butylperoxy butane. One organic peroxide may be used alone, or two or more organic peroxides may be used in combination.

Among the organic peroxides as listed above, *t*-butylperoxyisopropyl monocarbonate, *t*-pentylperoxyisopropyl monocarbonate, *t*-hexylperoxyisopropyl monocarbonate, *t*-butylperoxy-2-ethylhexyl monocarbonate, *t*-pentylperoxy-2-ethylhexyl monocarbonate, *t*-hexylperoxy-2-ethylhexyl monocarbonate, *t*-amylperoxyisopropyl monocarbonate, di-*t*-hexyl peroxide, di-*n*-propyl peroxydicarbonate, diisopropyl peroxydicarbonate, di-*sec*-butyl peroxydicarbonate, bis(4-*t*-butylcyclohexyl) peroxydicarbonate, bis(2-ethylhexyl) peroxydicarbonate, t-butyl peroxy-2-ethylhexanoate, t-butyl peroxyisobutyrate, t-hexyl peroxy-2-ethylhexanoate, 1,1,3,3-tetramethylbutyl peroxy-2-ethylhexanoate, t-butyl peroxypivalate, t-hexyl peroxypivalate, t-butyl peroxyneodecanoate, t-hexyl peroxyneodecanoate, and 1,1,3,3-tetramethylbutyl peroxyneodecanoate are preferred since these organic peroxides have a high hydrogen abstraction ability and a high increasing effect on the drawdown time.

To set the heating temperature low in the modification, the peroxide is preferably a compound having a one-minute half-life temperature of 200°C or lower. The one-minute half-life temperature is more preferably 170°C or lower and even more preferably 140°C or lower. The one-minute half-life temperature may be at least 50°C, at least 60°C, or at least 70°C.

Particularly preferred examples of the organic peroxide having such a one-minute half-life temperature include di-*n*-propyl peroxydicarbonate, diisopropyl peroxydicarbonate, di-*sec*-butyl peroxydicarbonate, bis(4-*t*-butylcyclohexyl) peroxydicarbonate, bis(2-ethylhexyl) peroxydicarbonate, *t*-butyl peroxy-2-ethylhexanoate, *t*-butyl peroxyisobutyrate, *t*-hexyl peroxy-2-ethylhexanoate, 1,1,3,3-tetramethylbutyl peroxy-2-ethylhexanoate, *t*-butyl peroxypivalate, *t*-hexyl peroxypivalate, *t*-butyl peroxyneodecanoate, *t*-hexyl peroxyneodecanoate, and 1,1,3,3-tetramethylbutyl peroxyneodecanoate.

When the peroxide is an inorganic peroxide, examples of the inorganic peroxide include hydrogen peroxide, potassium peroxide, calcium peroxide, sodium peroxide, magnesium peroxide, potassium persulfate, sodium persulfate, and ammonium persulfate, which are preferred in view of conditions such as the heating temperature and the time in the modification. Among these peroxides, hydrogen peroxide, potassium persulfate, sodium persulfate, and ammonium persulfate are preferred since they are easy to handle and have a decomposition temperature suitable for the heating temperature in the modification. One inorganic peroxide may be used alone, or two or more inorganic peroxides may be used in combination. Alternatively, an organic peroxide and an inorganic peroxide may be used in combination.

The amount of the peroxide used (the net amount of the peroxide itself) is preferably from 0.001 to 10 parts by weight, more preferably from 0.01 to 5 parts by weight, and even more preferably from 0.1 to 3 parts by weight per 100 parts by weight of the P3HA. When the amount of the peroxide used is in such a range, an excessive reaction can be prevented, and the modification can proceed efficiently. As a result, a modified aliphatic polyester resin can be produced with reduced formation of high-molecular-weight components.

In the method where a P3HA is modified using a peroxide in an aqueous dispersion, a modified aliphatic polyester resin can be produced even when the amount of the peroxide used is greater than in the method as described in Patent Literature 2 or 3 where the P3HA is modified by melting and kneading the P3HA in the presence of the peroxide. Thus, there is the advantage of increasing the degree of modification and achieving a large value of the drawdown time/melt viscosity ratio. From this viewpoint, the amount of the peroxide used (the net amount of the peroxide itself) is preferably 0.4 parts by weight or more, more preferably 0.6 parts by weight or more, even more preferably 0.8 parts by weight or more, and particularly preferably 0.9 parts by weight or more per 100 parts by weight of the P3HA to be modified.

The peroxide may be used in any form such as a solid or a liquid. The peroxide may be a liquid diluted with a diluent or the like.

The peroxide in the form of a diluted liquid is preferably an aqueous peroxide dispersion containing the peroxide, water, and a surfactant and/or thickener. The aqueous peroxide dispersion has a low viscosity, is excellent in long-term stability, and can increase safety during transportation and storage. In addition, when the aqueous peroxide dispersion is mixed with a P3HA and water, the peroxide is likely to be dispersed uniformly in the aqueous P3HA dispersion, and the modification reaction can proceed more uniformly.

The amount of the peroxide (net amount of the peroxide itself) contained in the aqueous peroxide dispersion is typically from 10 to 65 wt%, preferably from 15 to 50 wt%, and more preferably from 20 to 40 wt%. When the aqueous peroxide dispersion contains such an amount of the peroxide, excellent long-term stability of the aqueous peroxide dispersion can be achieved while reducing the cost of transportation of the aqueous peroxide dispersion.

The amount of water contained in the aqueous peroxide dispersion is typically from 25 to 90 wt%, preferably from 40 to 80 wt%, and more preferably from 50 to 75 wt%. When the aqueous peroxide dispersion contains such an amount of water, excellent long-term stability of the aqueous peroxide dispersion can be achieved while reducing the cost of transportation of the aqueous peroxide dispersion.

The aqueous peroxide dispersion may be in any form where the peroxide is dispersed in water. The aqueous peroxide dispersion may be an emulsion, a suspension, or a slurry. An emulsion is preferred to allow the modification reaction to proceed uniformly.

<Surfactant>

The surfactant acts as an emulsifier. The inclusion of the surfactant in the aqueous peroxide dispersion can improve the dispersibility of the peroxide and enhance the long-term stability of the aqueous peroxide dispersion. The surfactant used can be a commonly known surfactant and is preferably a surfactant that is liquid at room temperature. In particular, an anionic surfactant or a non-ionic surfactant can be preferably used. The specific type of the surfactant used may be selected as appropriate in view of factors such as the type of the peroxide and the desired viscosity. One surfactant may be used alone, or two or more surfactants may be used in combination.

Specific examples of the anionic surfactant include sodium lauryl sulfate, sodium lauryl alcohol sulfate, sodium alkanesulfonates, sodium dodecylbenzenesulfonate, dialkyl esters of sodium sulfosuccinate, sodium di(2-ethylhexyl) phosphate, and sodium tetradecyl sulfate. Specific examples of the non-ionic surfactant include polyoxyethylene polyoxypropylene glycol, sorbitan fatty acid esters, polyoxyethylene sorbitan fatty acid esters, and polyoxyethylene fatty acid esters.

The amount of the surfactant contained in the aqueous peroxide dispersion can be chosen as appropriate in view of factors such as the type of the surfactant, the type and concentration of the peroxide, and the storage temperature of the aqueous peroxide dispersion. The amount of the surfactant is preferably from 0.5 to 10 parts by weight and more preferably from 1 to 6 parts by weight per 100 parts by weight of water contained in the aqueous peroxide dispersion. When the surfactant is used in such an amount, the long-term stability of the aqueous peroxide dispersion can be ensured while reducing the influence of the surfactant on the physical properties of the resulting modified aliphatic polyester resin. When the aqueous peroxide dispersion contains a thickener, any surfactant need not be used.

<Thickener>

The inclusion of a thickener in the aqueous peroxide dispersion can also improve the dispersibility of the peroxide and enhance the long-term stability of the aqueous peroxide dispersion. The thickener used can be a commonly known thickener, and the specific type of the thickener used may be selected as appropriate in view of factors such as the type of the peroxide and the desired viscosity. One thickener may be used alone, or two or more thickeners may be used in combination. A thickener may be used alone or in combination with a surfactant.

Specific examples of the thickener include water-soluble polymers such as polyvinyl alcohol (PVA), methylcellulose, ethylcellulose, hydroxymethylcellulose, hydroxyethylcellulose, polyacrylic acid, sodium polyacrylate, potassium polyacrylate, polymethacrylic acid, sodium polymethacrylate, and polyethylene glycol-polypropylene glycol block copolymer. Among these, polyvinyl alcohol, hydroxyethylcellulose, and methylcellulose are preferred.

The amount of the thickener contained in the aqueous peroxide dispersion can be chosen as appropriate in view of factors such as the type of the thickener, the type and concentration of the peroxide, and the storage temperature of the aqueous peroxide dispersion. The amount of the thickener is preferably from 0.5 to 10 parts by weight and more preferably from 1 to 6 parts by weight per 100 parts by weight of water contained in the aqueous peroxide dispersion. When the thickener is used in such an amount, the long-term stability of the aqueous peroxide dispersion can be ensured while reducing the influence of the thickener on the physical properties of the resulting modified aliphatic polyester resin.

Preferably, the aqueous peroxide dispersion further contains a freezing-point depressant. The inclusion of the freezing-point depressant in the aqueous peroxide dispersion allows the aqueous peroxide dispersion to avoid freezing even at a temperature of 0°C or lower. This makes it possible to transport and store the aqueous peroxide dispersion at a low temperature, thus further increasing safety.

The freezing-point depressant used can be any known compound which has been used to depress the freezing point of water. In particular, a water-soluble alcohol can be preferably used. Specific examples of the water-soluble alcohol include methyl alcohol, ethyl alcohol, n-propyl alcohol, isopropyl alcohol, ethylene glycol, and glycerin.

The amount of the freezing-point depressant contained in the aqueous peroxide dispersion can be chosen as appropriate in view of factors such as the type of the freezing-point depressant and the storage temperature of the aqueous peroxide dispersion. The amount of the freezing-point depressant is preferably from 1 to 500 parts by weight, more preferably from 5 to 300 parts by weight, even more preferably from 10 to 150 parts by weight, and particularly preferably from 15 to 80 parts by weight per 100 parts by weight of water contained in the aqueous peroxide dispersion. When the amount of the freezing-point depressant used is in such a range, freezing of the aqueous peroxide dispersion can be avoided while ensuring the dispersibility of the peroxide.

When a peroxide is used in the form of an aqueous peroxide dispersion, the aqueous peroxide dispersion is mixed with a P3HA and water to prepare an aqueous P3HA dispersion containing the peroxide, and the aqueous dispersion is heated to a temperature suitable for modification of the P3HA. In this manner, a modified aliphatic polyester resin (A) can be produced.

<Reductant>

The peroxide as described above may be used in combination with a reductant to form a redox system. Reacting the peroxide in the presence of the reductant accelerates radical generation arising from decomposition of the peroxide, thus making it possible to modify the P3HA in the aqueous P3HA dispersion at a relatively low temperature.

Examples of the reductant include, but are not limited to: metal-ion containing compounds in a reducing state such as ferrous sulfate and cuprous naphthenate; chelate agents such as sodium ethylenediaminetetraacetate and sodium iron hexamethylenediaminetetraacetate; ascorbic acid; ascorbic acid salts such as sodium ascorbate and potassium ascorbate; erythorbic acid; erythorbic acid salts such as sodium erythorbate and potassium erythorbate; sugars; sulfinic acid salts such as sodium hydroxymethanesulfinate; sulfurous acid salts such as sodium sulfite, potassium sulfite, sodium hydrogen sulfite, aldehyde-sodium hydrogen sulfite, and potassium hydrogen sulfite; pyrosulfurous acid salts such as sodium pyrosulfite, potassium pyrosulfite, sodium hydrogen pyrosulfite, and potassium hydrogen pyrosulfite; thiosulfuric acid salts such as sodium thiosulfate and potassium thiosulfate; phosphorus acid; phosphorus acid salts such as sodium phosphite, potassium phosphite, sodium hydrogen phosphite, and potassium hydrogen phosphite; pyrophosphorus acid; pyrophosphorus acid salts such as sodium pyrophosphite, potassium pyrophosphite, sodium hydrogen pyrophosphite, and potassium hydrogen pyrophosphite; and sodium formaldehyde sulfoxylate.

One such reductant may be used alone, or two or more such reductants may be used in combination. Specifically, a metal ion-containing compound in a reducing state may be used as a first reductant in combination with a second reductant other than the metal ion-containing compound, or ferrous sulfate and sodium formaldehyde sulfoxylate may be used in combination.

<Polymer Dispersant>

A polymer dispersant may be added to the aqueous P3HA dispersion to improve the dispersibility of the P3HA. Examples of the polymer dispersant include, but are not limited to, water-soluble polymers such as polyvinyl alcohol (PVA), methylcellulose, ethylcellulose, hydroxymethylcellulose, hydroxyethylcellulose, polyacrylic acid, sodium polyacrylate, potassium polyacrylate, polymethacrylic acid, sodium polymethacrylate, and polyethylene glycol-polypropylene glycol block copolymer. One polymer dispersant may be used alone, or two or more polymer dispersants may be used in combination. The amount of the polymer dispersant added is not limited to a particular range and may be chosen as appropriate.

In the step (3), the aqueous P3HA dispersion containing the added peroxide is heated to a temperature suitable for the modification. The heating temperature is preferably equal to or lower than the one-minute half-life temperature of the peroxide used and more preferably in the range of 0 to 100°C. The heating temperature is preferably at most 99°C, more preferably at most 97°C, even more preferably at most 90°C, still even more preferably at most 85°C, and particularly preferably at most 80°C. The heating temperature is more preferably at least 20°C, even more preferably at least 30°C, and particularly preferably at least 40°C. The method using the peroxide to modify the P3HA in the aqueous dispersion can accomplish the modification at a relatively low temperature without having to heat the P3HA to its melting temperature.

In the subsequent step (4), the heating temperature is preferably maintained after addition of all of the peroxide. This allows the modification reaction with the peroxide to proceed sufficiently. The time for which the heating temperature is maintained is not limited to a particular range but is preferably from 0 to 15 hours and more preferably from 1 to 10 hours.

The steps (3) and (4) can be performed at a pressure which is not so high. Specifically, the steps (3) and (4) can be performed at a pressure of less than 1 MPa or a pressure of less than 0.5 MPa. Preferably, the steps (3) and (4) may be performed at a pressure of 0.05 to 0.3 MPa.

After the modification reaction, the modified P3HA is separated from the aqueous dispersion, and thus a modified aliphatic polyester resin can be obtained. The method for separating the modified P3HA is not limited to using a particular technique. For example, filtration, centrifugation, heat drying, or spray drying can be used. For example, with the use of spray drying, the modified P3HA can be obtained in the form of powder directly from the aqueous dispersion.

The modified aliphatic polyester resin production method described above does not involve any process in which the aliphatic polyester resin is foamed by introducing a blowing agent such as carbon dioxide, a hydrocarbon, or an ether. Thus, the modified aliphatic polyester resin produced is substantially free of internal bubbles.

[Aliphatic Polyester Resin Composition]

An aliphatic polyester resin composition according to a second aspect of the present embodiment contains the modified aliphatic polyester resin (A) according to the first aspect and may optionally contain at least one selected from the group consisting of an unmodified poly(3-hydroxyalkanoate) resin (B), an additional resin, a nucleating agent, and a lubricant.

<Unmodified Poly(3-hydroxyalkanoate) Resin (B)>

The aliphatic polyester resin composition may contain an unmodified poly(3-hydroxyalkanoate) resin (B) (hereinafter also referred to as "unmodified P3HA (B)"). The term "unmodified P3HA" refers to a P3HA whose molecules, in contrast with those of a modified P3HA, do not have any branched structure introduced by the action of a peroxide. The modified aliphatic polyester resin (A) according to the first aspect does itself have a high stabilizing effect on a molding process and have a z-average molecular weight/weight-average molecular weight ratio of less than 10. Thus, the use of an aliphatic polyester resin composition made by adding an unmodified P3HA to the modified resin can also offer the advantage of allowing a molding process to be stably performed under practical process conditions and reducing the occurrence of foreign materials in the resulting molded article.

An aliphatic polyester resin composition containing the modified aliphatic polyester resin (A) and the unmodified P3HA (B) is preferably such that the drawdown time/melt viscosity ratio described above is from $2.0 \times 10^{-2}$ to $5.0 \times 10^{-1}$ (sec/[Pa•s]). In this case, the use of the aliphatic polyester resin composition allows a molding process to be stably performed under practical process conditions. The drawdown time and the melt viscosity are determined as previously described. The drawdown time/melt viscosity ratio of the resin composition is more preferably from $2.0 \times 10^{-2}$ to $1.0 \times 10^{-1}$ (sec/[Pa•s]) and even more preferably from $2.0 \times 10^{-2}$ to $8.0 \times 10^{-2}$ (sec/[Pa•s]). The drawdown time/melt viscosity ratio may be at least $2.5 \times 10^{-2}$ (sec/[Pa•s]) or at least $3.0 \times 10^{-2}$ (sec/[Pa•s]). The drawdown time/melt viscosity ratio may be at most $7.0 \times 10^{-2}$ (sec/[Pa•s]) or at most $6.0 \times 10^{-2}$ (sec/[Pa•s]).

Preferably, the drawdown time/melt viscosity ratio of the modified aliphatic polyester resin (A) contained in the aliphatic polyester resin composition according to the second aspect is relatively high. Specifically, the drawdown time/melt viscosity ratio of the modified aliphatic polyester resin (A) is preferably $2.5 \times 10^{-2}$ (sec/[Pa•s]) or more and more preferably $3.0 \times 10^{-2}$ (sec/[Pa•s]) or more.

The details of the unmodified P3HA (B) are the same as those of the poly(3-hydroxyalkanoate) resin described above for the modified aliphatic polyester resin according to the first aspect. The unmodified P3HA (B) is preferably P3HB, P3HB3HH, P3HB3HV, P3HB3HV3HH, or P3HB4HB, more preferably P3HB, P3HB3HH, P3HB3HV, or P3HB4HB, and particularly preferably P3HB3HH.

When the aliphatic polyester resin composition according to the second aspect contains the unmodified P3HA (B), the proportions of the modified aliphatic polyester resin (A) and the unmodified P3HA (B) are not limited to particular ranges. For example, it is preferable that the proportion of the modified aliphatic polyester resin (A) be from 0.1 to 99.9 wt% and the proportion of the poly(3-hydroxyalkanoate) resin (B) be from 0.1 to 99.9 wt% based on 100 wt% of the total amount of the resins (A) and (B). More preferably, the proportion of the resin (A) is from 1 to 99 wt% and the proportion of the resin (B) is from 1 to 99 wt%. Even more preferably, the proportion of the resin (A) is from 5 to 95 wt% and the proportion of the resin (B) is from 5 to 95 wt%.

In the aliphatic polyester resin composition according to the second aspect, the total amount of the aliphatic polyester resin (A) and the unmodified poly(3-hydroxyalkanoate) resin (B) which is an optional component is not limited to a particular range, but is preferably 20 wt% or more, more preferably 30 wt% or more, even more preferably 40 wt% or more, still even more preferably 60 wt% or more, and particularly preferably 70 wt% or more. When the total amount is 20 wt% or more, the resin composition is likely to have enhanced biodegradability. The upper limit of the total amount is not limited to a particular value. The total amount is preferably 95 wt% or less, more preferably 92 wt% or less, and even more preferably 90 wt% or less.

<Additional Resin>

The aliphatic polyester resin composition may contain an additional resin that is classified neither as the modified aliphatic polyester resin (A) according to the first aspect nor as the unmodified P3HA (B). The additional resin is not limited to a particular type but is preferably a resin that does not significantly diminish the compatibility or moldability in molding of the aliphatic polyester resin composition or the mechanical properties of the resulting molded article. When the resulting molded article is used in an application requiring biodegradability, the additional resin is preferably a biodegradable resin.

Examples of the additional resin include: an aliphatic polyester having a structure formed by polycondensation of an aliphatic diol and an aliphatic dicarboxylic acid; and an aliphatic-aromatic polyester formed using both an aliphatic compound and an aromatic compound as monomers. Examples of the aliphatic polyester include polyethylene succinate, polybutylene succinate (PBS), polyhexamethylene succinate, polyethylene adipate, polybutylene adipate, polyhexamethylene adipate, polybutylene succinate adipate (PBSA), polyethylene sebacate, and polybutylene sebacate. Examples of the aliphatic-aromatic polyester include poly(butylene adipate-co-butylene terephthalate) (PBAT), poly(butylene sebacate-co-butylene terephthalate), poly(butylene azelate-co-butylene terephthalate), and poly(butylene succinate-co-butylene terephthalate) (PBST). One such additional resin may be used, or two or more such additional resins may be used in combination.

When the aliphatic polyester resin composition contains the additional resin, the amount of the additional resin is preferably 250 parts by weight or less, more preferably 100 parts by weight or less, even more preferably 50 parts by weight or less, and particularly preferably 20 parts by weight or less per 100 parts by weight of the total amount of the modified aliphatic polyester resin (A) and the unmodified P3HA (B) which is an optional component. The amount of the additional resin may be 10 parts by weight or less, 5 parts by weight or less, or 1 part by weight or less. The lower limit of the amount of the additional resin is not limited to a particular value and may be 0 part by weight.

<Nucleating Agent>

The aliphatic polyester resin composition may further contain a nucleating agent. When the aliphatic polyester resin composition contains a nucleating agent, crystallization of the modified aliphatic polyester resin (A) and the unmodified P3HA (B) which is an optional component can be accelerated to improve moldability, productivity, etc.

The nucleating agent used is not limited to a particular type and may be a conventionally known nucleating agent. Examples include: pentaerythritol; inorganic substances such as boron nitride, titanium oxide, talc, layered silicates, calcium carbonate, sodium chloride, and metal phosphates; naturally occurring sugar alcohol compounds such as erythritol, galactitol, mannitol, and arabitol; polyvinyl alcohol; chitin; chitosan; polyethylene oxide; amides of aliphatic carboxylic acids; salts of aliphatic carboxylic acids; aliphatic alcohols; esters of aliphatic carboxylic acids; dicarboxylic acid derivatives such as dimethyl adipate, dibutyl adipate, diisodecyl adipate, and dibutyl sebacate; cyclic compounds such as indigo, quinacridone, and quinacridone magenta which have in their molecule a functional group C=O and a functional group selected from NH, S, and O; sorbitol derivatives such as bis(benzylidene) sorbitol and bis(p-methylbenzylidene) sorbitol; compounds such as pyridine, triazine, and imidazole which have a nitrogen-containing heteroaromatic core; phosphoric ester compounds; bisamides of higher fatty acids; metal salts of higher fatty acids; branched polylactic acid; and low-molecular-weight poly(3-hydroxybutyrate). One of these nucleating agents may be used alone, or two or more thereof may be used in combination.

The amount of the nucleating agent is not limited to a particular range and may be any value as long as the nucleating agent accelerates the crystallization of the modified aliphatic polyester resin (A) and the unmodified P3HA (B) which is an optional component. The amount of the nucleating agent is preferably from 0.05 to 12 parts by weight, more preferably from 0.1 to 10 parts by weight, and even more preferably from 0.5 to 8 parts by weight per 100 parts by weight of the total amount of the modified aliphatic polyester resin (A) and the unmodified P3HA (B) which is an optional component. When the amount of the nucleating agent is in the above range, the effect of the nucleating agent can be obtained while minimizing a reduction in viscosity during molding or in physical properties of the resulting molded article.

<Lubricant>

The aliphatic polyester resin composition may further contain a lubricant. When the aliphatic polyester resin composition contains a lubricant, the surface smoothness of the resulting molded article can be improved. The lubricant is not limited to a particular type. Preferably, the aliphatic polyester resin composition contains at least one selected from the group consisting of behenamide, stearamide, erucamide, and oleamide. When the aliphatic polyester resin composition contains any of these lubricants, the resulting molded article can have good lubricity (in particular, external lubricity). In terms of improvement in processability and productivity, the aliphatic polyester resin composition preferably contains behenamide and/or erucamide.

The lubricant used may be behenamide, stearamide, erucamide, oleamide, or a combination of two or more thereof. Alternatively, behenamide, stearamide, erucamide, or oleamide may be used in combination with a lubricant other than them (hereinafter referred to as "other lubricant"). Examples of the other lubricant include, but are not limited to: alkylene fatty acid amides such as methylenebisstearamide and ethylenebisstearamide; polyethylene wax; oxidized polyester wax; glycerin monofatty acid esters such as glycerin monostearate, glycerin monobehenate, and glycerin monolaurate; organic acid monoglycerides such as succinylated monoglycerides of saturated fatty acids; sorbitan fatty acid esters such as sorbitan behenate, sorbitan stearate, and sorbitan laurate; polyglycerin fatty acid esters such as diglycerin stearate, diglycerin laurate, tetraglycerin stearate, tetraglycerin laurate, decaglycerin stearate, and decaglycerin laurate; and higher alcohol fatty acid esters such as stearyl stearate. One such other lubricant may be used alone, or two or more such other lubricants may be used in combination.

The amount of the lubricant (when two or more lubricants are used, the total amount of the lubricants) is not limited to a particular range and may be any value as long as the lubricant(s) can provide lubricity to the molded article. The (total) amount of the lubricant(s) is preferably from 0.01 to 20 parts by weight, more preferably from 0.05 to 10 parts by weight, even more preferably from 0.5 to 10 parts by weight, still even more preferably from 0.5 to 5 parts by weight, and particularly preferably from 0.7 to 4 parts by weight per 100 parts by weight of the total amount of the modified aliphatic polyester resin (A) and the unmodified P3HA (B) which is an optional component. When the (total) amount of the lubricant(s) is in the above range, the effect of the lubricant(s) can be obtained while avoiding bleeding out of the lubricant(s) to the surface of the molded article.

<Other Components>

The aliphatic polyester resin composition according to the second aspect of the present embodiment can contain other components to the extent that the other components do not impair the function of the resulting molded article. Examples of the other components include a plasticizer, an inorganic filler, an antioxidant, an ultraviolet absorber, a colorant such as a dye or pigment, and an antistatic agent.

Examples of the plasticizer include, but are not limited to: modified glycerin compounds such as glycerin diacetomonolaurate, glycerin diacetomonocaprylate, and glycerin diacetomonodecanoate; adipic ester compounds such as diethylhexyl adipate, dioctyl adipate, and diisononyl adipate; polyether ester compounds such as polyethylene glycol dibenzoate, polyethylene glycol dicaprylate, and polyethylene glycol diisostearate; benzoic ester compounds; epoxidized soybean oil; 2-ethylhexyl esters of epoxidized fatty acids; and sebacic monoesters. One of these plasticizers may be used alone, or two or more thereof may be used in combination. Among the above plasticizers, the modified glycerin compounds and the polyether ester compounds are preferred in terms of availability and effectiveness. One of these compounds may be used alone, or two or more thereof may be used in combination.

Examples of the inorganic filler include, but are not limited to, clay, synthetic silicon, carbon black, barium sulfate, mica, glass fibers, whiskers, carbon fibers, calcium carbonate, magnesium carbonate, glass powder, metal powder, kaolin, graphite, molybdenum disulfide, and zinc oxide. One of these may be used alone, or two or more thereof may be used in combination.

Examples of the antioxidant include, but are not limited to, phenol antioxidants, phosphorus antioxidants, and sulfur antioxidants. One of these may be used alone, or two or more thereof may be used in combination.

Examples of the ultraviolet absorber include, but are not limited to, benzophenone compounds, benzotriazole compounds, triazine compounds, salicylic acid compounds, cyanoacrylate compounds, and nickel complex salt compounds. One of these may be used alone, or two or more thereof may be used in combination.

Examples of the colorant such as a pigment or dye include, but are not limited to: inorganic colorants such as titanium oxide, calcium carbonate, chromium oxide, copper suboxide, calcium silicate, iron oxide, carbon black, graphite, titanium yellow, and cobalt blue; soluble azo pigments such as lake red, lithol red, and brilliant carmine; insoluble azo pigments such as dinitroaniline orange and fast yellow; phthalocyanine pigments such as monochlorophthalocyanine blue, polychlorophthalocyanine blue, and polybromophthalocyanine green; condensed polycyclic pigments such as indigo blue, perylene red, isoindolinone yellow, and quinacridone red; and dyes such as Oracet yellow. One of these may be used alone, or two or more thereof may be used in combination.

Examples of the antistatic agent include, but are not limited to: low-molecular-weight antistatic agents such as fatty acid ester compounds, aliphatic ethanolamine compounds, and aliphatic ethanolamide compounds; and high-molecular-weight antistatic agents. One of these may be used alone, or two or more thereof may be used in combination.

The amount of each of the other components described above is not limited to a particular range and may be any value as long as the effect of the invention can be achieved. The amount of each of the other components can be set as appropriate by those skilled in the art.

[Method for Producing Aliphatic Polyester Resin Composition]

The aliphatic polyester resin composition according to the second aspect of the present embodiment can be produced by a known method. A specific example is a method in which the modified aliphatic polyester resin (A) according to the first aspect is melted and kneaded, optionally together with an unmodified poly(3-hydroxyalkanoate) resin (B), an additional resin, a nucleating agent, a lubricant, and other components, by using a device such as an extruder, a kneader, a Banbury mixer, or a roll mill. In the melting and kneading, the components are preferably mixed with care so as to avoid a reduction in molecular weight caused by thermal decomposition. Alternatively, the aliphatic polyester resin composition can be produced by dissolving the components in a solvent and then removing the solvent.

In the production by melting and kneading, each of the components may be individually placed into a device such as an extruder, or the components may be mixed first and then the mixture may be placed into a device such as an extruder. When the melting and kneading are performed by an extruder, the resulting aliphatic polyester resin composition may be extruded into a strand, and then the strand may be cut into particles of bar shape, cylindrical shape, elliptic cylindrical shape, spherical shape, cubic shape, or rectangular parallelepiped shape.

The resin temperature in the melting and kneading depends on the properties such as melting point and melt viscosity of the resin used and cannot be definitely specified. In terms of achieving high dispersibility while avoiding thermal decomposition of the aliphatic polyester resin, the resin temperature is preferably from 140 to 200°C, more preferably from 150 to 195°C, and even more preferably from 160 to 190°C.

\<Method for Producing Molded Article\>

A molded article can be produced from the modified aliphatic polyester resin according to the first aspect or the aliphatic polyester resin composition according to the second aspect. The production is not limited to using a particular molding method, and a commonly used molding method can be employed. Specific examples of the molding method include blown film molding, extrusion blow molding, injection blow molding, extrusion molding, calender molding, vacuum molding, and injection molding.

According to the present embodiment, stable processability with reduced drawdown can be achieved in blown film molding, extrusion blow molding, injection blow molding, extrusion molding, calender molding, or vacuum molding, and a sheet, a film, a blown bottle, an extrusion-molded article, or a vacuum-molded article containing few foreign materials and having good surface properties can be produced. In injection molding, an injection-molded article having a reduced amount of burrs and excellent in processability can be produced.

The modified aliphatic polyester resin according to the first aspect, the aliphatic polyester resin composition according to the second aspect, and the molded article formed from the resin or the composition are suitable for use in various fields such as agricultural industry, fishery industry, forestry industry, horticultural industry, medical industry, hygiene industry, food industry, apparel industry, non-apparel industry, packing industry, automotive industry, building material industry, and other industries.

In the following items, preferred aspects of the present disclosure are listed. The present invention is not limited to the following items.

[Item 1]

A modified aliphatic polyester resin (A) including a poly(3-hydroxyalkanoate) resin, wherein

a ratio between a melt viscosity (Pa•s) and a drawdown time (sec) is from $2.0 \times 10^{-2}$ to $5.0 \times 10^{-1}$ (sec/[Pa•s]),
a z-average molecular weight/weight-average molecular weight ratio is less than 10,
the melt viscosity is an apparent melt viscosity ($\eta$) calculated by the equation (1) given above using a load (F) measured with a capillary rheometer during extrusion in which a melt of the modified aliphatic polyester resin (A) is extruded at a volume flow rate (Q) of 0.716 cm³/min and a shear rate of 122 sec⁻¹ from an orifice having a radius (d) of 0.05 cm and a capillary length (1) of 1 cm and connected to a tip of a barrel having a barrel set temperature of 170°C and a radius (D) of 0.4775 cm, and
the drawdown time is a time taken for the modified aliphatic polyester resin (A) to fall 20 cm after being discharged from the orifice in measurement of the melt viscosity.

[Item 2]

The modified aliphatic polyester resin (A) according to item 1, wherein the melt viscosity is from 500 to 3000 (Pa•s).

[Item 3]

The modified aliphatic polyester resin (A) according to item 1 or 2, wherein the drawdown time is from 30 to 200 (sec).

[Item 4]

The modified aliphatic polyester resin (A) according to any one of items 1 to 3, wherein the z-average molecular weight/weight-average molecular weight ratio is less than 3.

[Item 5]

The modified aliphatic polyester resin (A) according to any one of items 1 to 4, wherein the poly(3-hydroxyalkanoate) resin is at least one selected from the group consisting of poly(3-hydroxybutyrate-co-3-hydroxyvalerate), poly(3-hydroxybutyrate-co-3-hydroxyhexanoate), poly(3-hydroxybutyrate-co-3-hydroxyvalerate-co-3-hydroxyhexanoate), poly(3-hydroxybutyrate-co-4-hydroxybutyrate), poly(3-hydroxybutyrate-co-3-hydroxyoctanoate), and poly(3-hydroxybutyrate-co-3-hydroxydecanoate).

[Item 6]

The modified aliphatic polyester resin (A) according to any one of items 1 to 5, wherein the poly(3-hydroxyalkanoate) resin is a resin modified using a peroxide.

[Item 7]

The modified aliphatic polyester resin (A) according to item 6, wherein an amount of the peroxide used is from 0.1 to 10 parts by weight per 100 parts by weight of the poly(3-hydroxyalkanoate) resin.

[Item 8]

The modified aliphatic polyester resin (A) according to item 6 or 7, wherein the peroxide is a compound having a one-minute half-life temperature of 140°C or lower.

[Item 9]

The modified aliphatic polyester resin (A) according to any one of items 6 to 8, wherein the peroxide is di-*n*-propyl peroxydicarbonate, diisopropyl peroxydicarbonate, di-sec-butyl peroxydicarbonate, bis(4-*t*-butylcyclohexyl) peroxydicarbonate, bis(2-ethylhexyl) peroxydicarbonate, *t*-butyl peroxy-2-ethylhexanoate, *t*-butyl peroxyisobutyrate, *t*-hexyl peroxy-2-ethylhexanoate, 1,1,3,3-tetramethylbutyl peroxy-2-ethylhexanoate, *t*-butyl peroxypivalate, *t*-hexyl peroxypivalate, *t*-butyl peroxyneodecanoate, *t*-hexyl peroxyneodecanoate, or 1,1,3,3-tetramethylbutyl peroxyneodecanoate.

[Item 10]

The modified aliphatic polyester resin (A) according to any one of items 1 to 9, wherein a gel fraction is 10% or less.

[Item 11]

An aliphatic polyester resin composition containing the modified aliphatic polyester resin (A) according to any one of items 1 to 10.

[Item 12]

The aliphatic polyester resin composition according to item 11, further containing an unmodified poly(3-hydroxyalkanoate) resin (B).

[Item 13]

A molded article produced by molding the modified aliphatic polyester resin (A) according to any one of items 1 to 10 or the aliphatic polyester resin composition according to item 11 or 12.

[Item 14]

The molded article according to item 13, wherein the molded article is a sheet, a film, a blown bottle, an extrusion-molded article, a vacuum-molded article, or an injection-molded article.

**Examples**

Hereinafter, the present invention will be described more specifically using examples. The present invention is not limited by the examples in any respect. In the examples, the units "parts" and "%" are based on weight.

<Compounds Used in Examples and Comparative Examples>

<P3HAs>

The following types of poly(3-hydroxybutyrate-co-3-hydroxyhexanoate) (PHBH) (Kaneka Biodegradable Polymer PHBH™ manufactured by Kaneka Corporation) were used as P3HAs.

PHBH-1: Powdery PHBH, (3-hydroxybutyrate)/(3-hydroxyhexanoate) = 84.3/15.7 (mol/mol), weight-average molecular weight Mw measured by GPC = $50 \times 10^4$

PHBH-2: Powdery PHBH, (3-hydroxybutyrate)/(3-hydroxyhexanoate) = 94.4/5.6 (mol/mol), weight-average molecular weight Mw measured by GPC = $60 \times 10^4$

PHBH-3: Powdery PHBH, (3-hydroxybutyrate)/(3-hydroxyhexanoate) = 94.5/5.5 (mol/mol), weight-average molecular weight Mw measured by GPC = $40 \times 10^4$

The monomer proportions in each type of PHBH were determined as follows. To about 20 mg of the PHBH were added 1 mL of sulfuric acid-methanol mixture (15:85) and 1 mL of chloroform. The resulting mixture was hermetically sealed and heated at 100°C for 140 minutes to obtain a methyl ester of a PHBH decomposition product. The methyl ester was cooled, and then 0.5 mL of deionized water was added. The methyl ester and the deionized water were thoroughly mixed, and the mixture was left until it divided into an aqueous layer and an organic layer. After that, the organic layer was separately collected, and the monomer unit composition of the PHBH decomposition product in the organic layer was analyzed by capillary gas chromatography. The proportion of 3-hydroxyhexanoate was calculated from a peak area obtained by the chromatography.

<Peroxides>

The following peroxides were used.

PO-1: *t*-Butyl peroxy-2-ethylhexanoate ("Luperox 26" manufactured by ARKEMA Yoshitomi Ltd., one-minute half-life temperature = 130°C)

PO-2: *t*-Hexyl peroxy-2-ethylhexanoate ("Perhexyl O" manufactured by NOF Corporation, one-minute half-life temperature = 132°C)

PO-3: *t*-Butyl peroxyneodecanoate ("Luperox 10" manufactured by ARKEMA Yoshitomi Ltd., one-minute half-life temperature = 102°C)

PO-4: Di-*sec*-butyl peroxydicarbonate ("Luperox 225" manufactured by ARKEMA Yoshitomi Ltd., one-minute half-life temperature = 107°C)

PO-5: Aqueous emulsion of t-butyl peroxy-2-ethylhexanoate ("Luperox 26" manufactured by ARKEMA Yoshitomi Ltd., one-minute half-life temperature = 130°C)

<Lubricants>

Behenamide ("BNT 22H" manufactured by Nippon Fine Chemical Co., Ltd., which will be hereinafter referred to as "BA") and erucamide ("Neutron S" manufactured by Nippon Fine Chemical Co., Ltd., which will be hereinafter referred to as "EA") were used as lubricants.

The evaluation procedures described below were performed in Examples and Comparative Examples.

<Roll Kneading Conditions>

A two-roll mill having a pair of 8-inch diameter rolls was used. The roll temperature was set to 140°C, and the roll rotational speeds were set to 17 rpm (front) and 16 rpm (rear). The resin powder was fed to the two-roll mill and, after the resin material was wound around one of the rolls, kneading was continued for 2 minutes. The resin material was then cut out from the mill and pressed and cooled between two iron plates. As a result, a 0.5-mm-thick sheet was obtained. The sheet was cut into a piece with dimensions of about 5 mm × 5 mm, which was used to evaluate the melt viscosity and the drawdown time.

<Melt Viscosity>

A capillary rheometer manufactured by Shimadzu Corporation was used to measure a load (F) during extrusion in which a melt of the resin was extruded at a volume flow rate (Q) of 0.716 cm$^3$/min and a shear rate of 122 sec$^{-1}$ from an

orifice having a radius (d) of 0.05 cm and a capillary length (l) of 1 cm and connected to a tip of a barrel having a barrel set temperature of 170°C and a radius (D) of 0.4775 cm. The apparent melt viscosity ($\eta$) was calculated by the following equation (1).

[Math 1]

$$(\text{Equation 1}) \quad \eta = \frac{\pi \left( F/_{\pi D^2} \right) d^4}{8Ql}$$

<Drawdown Time>

In the melt viscosity measurement, the time taken for the molten resin discharged from the orifice to fall 20 cm was measured as the drawdown time (DT).

<Measurement of Weight-Average Molecular Weight and Z-Average Molecular Weight>

The weight-average molecular weight and the z-average molecular weight of each of the modified or unmodified aliphatic polyester resins obtained in Examples 1 to 12 or Comparative Examples 1 to 6 were measured as follows. First, the aliphatic polyester resin is dissolved in chloroform, and the solution was heated in a hot water bath at 60°C for 0.5 hours. The heated solution was passed through a disposable filter made of PTFE and having a pore diameter of 0.45 $\mu$m to remove soluble matter from the solution. The filtrate was subjected to GPC analysis under the conditions listed below to measure the weight-average and z-average molecular weights, from which the z-average molecular weight/weight-average molecular weight ratio was determined.

GPC system: High-performance liquid chromatograph 20A system manufactured by Shimadzu Corporation
Columns: K-G 4A (one column) and K-806M (two columns) manufactured by Showa Denko K.K.
Sample concentration: 1 mg/ml
Eluent: Chloroform solution
Eluent flow rate: 1.0 ml/min
Amount of injected sample: 100 $\mu$L
Analysis time: 30 minutes
Standard sample: Standard polystyrene

Examples of the charts obtained by the GPC analysis are shown in FIG. 1.

<Blown Film Molding Conditions>

Each of the resin compositions obtained in Examples 13 to 21 or Comparative Examples 8 to 11 was molded into a film by means of a blown film molding machine (ALM-IMF30) manufactured by AIKI RIOTECH Corporation. The extruder used was a 20-mm single-screw extruder having a full-flight screw (compression ratio: 2.4), the die used was a circular die with a lip thickness of 1.15 mm and a lip diameter of 30 mm, and the set temperature was from 143 to 155°C. The blow-up ratio and the occurrence of foreign materials in the film were evaluated in the following ways.

<Evaluation of Blow-up Ratio>

The film extruded from the lip of the circular die was inflated into a cylindrical tube having a diameter greater than the diameter of the die lip. The ratio between the diameters is referred to as "blow-up ratio", which is expressed by the following equation.

$$\text{Blow-up ratio} = \text{film diameter/die lip diameter}$$

The maximum blow-up ratio was determined by maximizing the amount of air for inflation of the film to the extent that the film width changed or the film was not broken.

<Evaluation of Occurrence of Foreign Materials in Film>

The film with a thickness of 60 μm was cut to prepare a sample with dimensions of 50 mm × 50 mm. The number of foreign materials having a longitudinal size of 10 μm or more in the sample was counted by means of a Peak scale loupe (magnification: × 20) manufactured by Tokai Sangyo Co., Ltd. The number of foreign materials was compared to that in a case where any modified P3HA was not added, and ratings were made according to the following criteria.

Good: The number of foreign materials was not greater than in Comparative Example 8 where any modified P3HA was not added.

Poor: The number of foreign materials was greater than in Comparative Example 8 where any modified P3HA was not added.

(Example 1)

A six-necked flask equipped with a stirrer, a baffle, a reflux condenser, a nitrogen gas inlet, a peroxide addition inlet, and a thermometer was charged with 100 parts by weight of the P3HA (PHBH-1) and 200 parts by weight of water (total amount of water including various kinds of dilution water) and then heated to 60°C. Once the liquid temperature reached 60°C, the flask was purged with nitrogen. After that, 2.0 parts by weight of t-butyl peroxy-2-ethylhexanoate (PO-1) was added as a peroxide over 0.5 hours, and the contents of the flask were stirred continuously at 60°C for another 0.5 hours. The contents of the flask were then heated to 95°C and stirred continuously for 5.5 hours. The aqueous suspension resulting from the reaction was spray-dried to obtain particles of a modified aliphatic polyester resin (A-1).

The modified aliphatic polyester resin was mixed with 0.5 parts by weight of the lubricant (BA) and 0.5 parts by weight of the lubricant (EA), and the mixture was kneaded by a roll mill to produce a sheet. The sheet was cut into a piece with dimensions of about 5 mm × 5 mm, which was used to evaluate the melt viscosity and the drawdown time. Evaluation of the weight-average molecular weight and the z-average molecular weight was also carried out. The results are shown in Table 1.

The gel fraction of the modified aliphatic polyester resin (A-1) was also measured by the method as previously described. The measured gel fraction was 4.0%. In contrast, the gel fraction of an unmodified resin of Comparative Example 1 was 1.5%.

(Examples 2 to 8, 11, and 12)

Production of modified aliphatic polyester resins and evaluation of the melt viscosity and the drawdown time were carried out in the same manner as in Example 1, except that the amount or type of the peroxide, the reaction temperature, or the type of the P3HA was changed as shown in Table 1. Evaluation of the weight-average molecular weight and the z-average molecular weight was also carried out. The results are shown in Table 1.

The gel fraction of the modified aliphatic polyester resin obtained in Example 3 was also measured. The measured gel fraction was 1.9%.

(Example 9)

A three-necked flask equipped with a stirrer and a thermometer was charged with 58 parts by weight of water, 1 part by weight of polyoxyethylene polyoxypropylene glycol as a surfactant, and 2 parts by weight of methylcellulose as a thickener, and the contents of the flask were mixed to prepare a mixed dispersion, to which 26 parts by weight of t-butyl peroxy-2-ethylhexanoate (PO-1) as a peroxide and 13 parts by weight of methyl alcohol as a freezing-point depressant were added dropwise under stirring. After the dropwise addition, the stirring was continued for 20 minutes to obtain a homogenous, milky white aqueous peroxide emulsion (PO-5). The aqueous peroxide emulsion obtained was stored in a container held at -20°C. After 1-month storage, the aqueous peroxide emulsion was observed to maintain a stable dispersion state.

A six-necked flask equipped with a stirrer, a baffle, a reflux condenser, a nitrogen gas inlet, a peroxide addition inlet, and a thermometer was charged with 100 parts by weight of the P3HA (PHBH-1) and 200 parts by weight of water (total amount of water including various kinds of dilution water) and then heated to 60°C. Once the liquid temperature reached 60°C, the flask was purged with nitrogen. After that, 0.77 parts by weight of the aqueous peroxide emulsion (PO-5) (containing 0.2 parts by weight of peroxide component) was added as a peroxide over 0.5 hours, and the contents of the flask were stirred continuously at 60°C for another 0.5 hours. The contents of the flask were then heated to 95°C and stirred continuously for 5.5 hours. The aqueous suspension resulting from the reaction was spray-dried to obtain particles of a modified aliphatic polyester resin (A-9).

The modified aliphatic polyester resin was mixed with 0.5 parts by weight of the lubricant (BA) and 0.5 parts by weight of the lubricant (EA), and the mixture was kneaded by a roll mill to produce a sheet. The sheet was cut into a piece with dimensions of about 5 mm × 5 mm, which was used to evaluate the melt viscosity and the drawdown time. Evaluation of the weight-average molecular weight and the z-average molecular weight was also carried out. The results are shown in Table 1.

(Example 10)

A six-necked flask equipped with a stirrer, a baffle, a reflux condenser, a nitrogen gas inlet, a peroxide addition inlet, and a thermometer was charged with 100 parts by weight of the P3HA (PHBH-1) and 200 parts by weight of water (total amount of water including various kinds of dilution water) and then heated to 60°C. Once the liquid temperature reached 60°C, the flask was purged with nitrogen. After that, 7.7 parts by weight of the aqueous peroxide emulsion (PO-5) (containing 0.2 parts by weight of peroxide component) was added as a peroxide over 0.5 hours, and the contents of the flask were stirred continuously at 60°C for another 0.5 hours. The contents of the flask were then heated to 95°C and stirred continuously for 5.5 hours. The aqueous suspension resulting from the reaction was spray-dried to obtain particles of a modified aliphatic polyester resin (A-10).

The modified aliphatic polyester resin was mixed with 0.5 parts by weight of the lubricant (BA) and 0.5 parts by weight of the lubricant (EA), and the mixture was kneaded by a roll mill to produce a sheet. The sheet was cut into a piece with dimensions of about 5 mm × 5 mm, which was used to evaluate the melt viscosity and the drawdown time. Evaluation of the weight-average molecular weight and the z-average molecular weight was also carried out. The results are shown in Table 1.

(Comparative Examples 1 to 3)

A mixture of 100 parts by weight of the P3HA (PHBH-1, PHBH-2, or PHBH-3) with 0.5 parts by weight of the lubricant (BA) and 0.5 parts by weight of the lubricant (EA) was prepared without modifying the aliphatic polyester resin with any peroxide, and the mixture was kneaded by a roll mill to produce a sheet. The sheet was cut into pellets, which were used to evaluate the melt viscosity and the drawdown time. Evaluation of the weight-average molecular weight and the z-average molecular weight was also carried out. The evaluation results are shown in Table 1.

(Comparative Examples 4 to 6)

The P3HA (PHBH-1), the peroxide (PO-1 or PO-2), the lubricant (BA), and the lubricant (EA) were dry-blended in the proportions shown in Table 1. The blend was melted and kneaded using a corotating twin-screw extruder (TEM 26ss manufactured by Toshiba Machine Co., Ltd.) at a set temperature of 140 to 160°C and a screw rotational speed of 100 rpm and formed into a strand; thus, a resin composition containing a modified aliphatic polyester resin was produced. The composition was cut into pellets, which were used to evaluate the melt viscosity and the drawdown time. Evaluation of the weight-average molecular weight and the z-average molecular weight was also carried out. The evaluation results are shown in Table 1.

(Comparative Example 7)

The P3HA (PHBH-1), the peroxide (PO-1), the lubricant (BA), and the lubricant (EA) were dry-blended in the proportions shown in Table 1. The blend was melted and kneaded using a corotating twin-screw extruder (TEM 26ss manufactured by Toshiba Machine Co., Ltd.) at a set temperature of 150 to 160°C and a screw rotational speed of 100 rpm. However, the viscosity of the blend became extremely high, and a modified aliphatic polyester resin was not able to be produced.

[Table 1]

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|
| P3HA [parts by weight] | PHBH-1 | 100 | 100 | 100 | 100 | 100 | 100 | 100 | 100 | 100 | 100 | | |
| | PHBH-2 | | | | | | | | | | | 100 | |
| | PHBH-3 | | | | | | | | | | | | 100 |
| Peroxide [parts by weight] | PO-1 | 2 | 0.2 | 1.0 | 5.0 | | | | | | | 2.0 | 2.0 |
| | PO-2 | | | | | 2.0 | | | | | | | |
| | PO-3 | | | | | | 2.0 | | | | | | |
| | PO-4 | | | | | | | 0.2 | 2.0 | | | | |
| | PO-5 | | | | | | | | | 0.2 | 2.0 | | |
| Lubricant [parts by weight] | BA | 0.5 | 0.5 | 0.5 | 0.5 | 0.5 | 0.5 | 0.5 | 0.5 | 0.5 | 0.5 | 0.5 | 0.5 |
| | EA | 0.5 | 0.5 | 0.5 | 0.5 | 0.5 | 0.5 | 0.5 | 0.5 | 0.5 | 0.5 | 0.5 | 0.5 |
| Modification method | | Aqueous dispersion | | | | | | | | | | | |
| Water temperature | °C | 95 | 95 | 95 | 95 | 90 | 75 | 75 | 75 | 95 | 95 | 95 | 95 |
| Apparent melt viscosity [$\eta$] | Pa•s | 2400 | 1230 | 1700 | 3420 | 2380 | 2300 | 1230 | 2400 | 1230 | 2400 | 2540 | 820 |
| Drawdown time [DT] | sec | 79 | 40 | 60 | 125 | 78 | 75 | 40 | 80 | 40 | 79 | 79 | 45 |
| DT/$\eta$ | sec/[Pa•s] | 3.3E-02 | 3.3E-02 | 3.5E-02 | 3.7E-02 | 3.3E-02 | 3.3E-02 | 3.3E-02 | 3.3E-02 | 3.3E-02 | 3.3E-02 | 3.1E-02 | 5.4E-02 |
| Mw | | $4.93 \times 10^5$ | $5.53 \times 10^5$ | $6.06 \times 10^5$ | $6.72 \times 10^5$ | $4.98 \times 10^5$ | $5.04 \times 10^5$ | $5.52 \times 10^5$ | $5.22 \times 10^5$ | $5.49 \times 10^5$ | $4.89 \times 10^5$ | $6.04 \times 10^5$ | $5.21 \times 10^5$ |
| Mz | | $1.05 \times 10^6$ | $1.03 \times 10^6$ | $1.33 \times 10^6$ | $1.37 \times 10^6$ | $1.09 \times 10^6$ | $9.42 \times 10^5$ | $1.08 \times 10^6$ | $9.88 \times 10^5$ | $1.03 \times 10^6$ | $1.03 \times 10^6$ | $1.08 \times 10^6$ | $1.03 \times 10^6$ |
| Mz/Mw | | 2.13 | 1.86 | 2.19 | 2.04 | 2.18 | 1.87 | 1.96 | 1.89 | 1.88 | 2.10 | 1.79 | 1.97 |

| | | Comp. 1 | Comp. 2 | Comp. 3 | Comp. 4 | Comp. 5 | Comp. 6 | Comp. 7 |
|---|---|---|---|---|---|---|---|---|
| P3HA [parts by weight] | PHBH-1 | 100 | | | 100 | 100 | 100 | 100 |
| | PHBH-2 | | 100 | | | | | |
| | PHBH-3 | | | 100 | | | | |
| Peroxide [parts by weight] | PO-1 | | | | 0.3 | | | 1.0 |
| | PO-2 | | | | | 0.1 | 0.2 | |
| | PO-3 | | | | | | | |
| Lubricant [parts by weight] | BA | 0.5 | 0.5 | 0.5 | 0.5 | 0.5 | 0.5 | 0.5 |
| | EA | 0.5 | 0.5 | 0.5 | 0.5 | 0.5 | 0.5 | 0.5 |
| Modification method | | - | - | - | Meh extrusion | | | |
| Set temperature | °C | - | - | - | 140-160 | 140-160 | 140-160 | 150-160 |
| Apparent melt viscosity [$\eta$] | Pa•s | 1140 | 1300 | 740 | 1270 | 1470 | 1760 | Production failed |
| Drawdown time [DT] | sec | 18 | 18 | 14 | 42 | 39 | 47 | |
| DT/$\eta$ | sec/[Pa•s] | 1.6E-02 | 1.4E-02 | 1.9E-02 | 3.3E-02 | 2.6E-02 | 2.7E-02 | |
| Mw | | $5.05 \times 10^5$ | $6.15 \times 10^5$ | $4.62 \times 10^5$ | $7.66 \times 10^7$ | $2.88 \times 10^7$ | $5.53 \times 10^7$ | |
| Mz | | $9.84 \times 10^5$ | $1.05 \times 10^6$ | $7.33 \times 10^6$ | $2.60 \times 10^{10}$ | $2.67 \times 10^{10}$ | $2.20 \times 10^{10}$ | |
| Mz/Mw | | 1.95 | 1.71 | 1.59 | 339 | 925 | 398 | |

Table 1 shows that for the modified aliphatic polyester resins of Examples 1 to 12, each of which was modified using a peroxide in an aqueous dispersion at a low temperature, the drawdown time/melt viscosity ratio (DT/$\eta$) was in the range of $2.0 \times 10^{-2}$ to $5.0 \times 10^{-1}$ (sec/[Pa•s] and z-average molecular weight/weight-average molecular weight ration was less than 10.

In Comparative Examples 1 to 3, where the aliphatic polyester resin used was not modified, the drawdown time/melt viscosity ratio was lower than $2.0 \times 10^{-2}$ (sec/[Pa•s]). In Comparative Examples 4 to 6, where the modified aliphatic polyester resin used was one prepared by melting and kneading a resin in the presence of a peroxide as described in Patent Literature 2 or 3, the z-average molecular weight/weight-average molecular weight ratio increased considerably and was much higher than 10 although the drawdown time/melt viscosity ratio was not lower than $2.0 \times 10^{-2}$ (sec/[Pa•s]).

Comparative Example 7 reveals that with the use of the method as described in Patent Literature 2 or 3 in which a resin is modified by melting and kneading in the presence of a peroxide, a modified resin cannot be produced if the amount of the peroxide used is large. In contrast, as demonstrated by Examples 1, 3 to 6, 8, and 10 to 12, the method in which a resin is modified in the presence of a peroxide in an aqueous dispersion can yield a desired modified resin even when the amount of the peroxide used is large.

FIG. 1 shows GPC charts obtained by GPC analysis for Example 1, Comparative Example 1, and Comparative Example 4. Comparison of Comparative Example 1 (dotted line), where an unmodified resin was analyzed, and Comparative Example 4 (dashed line), where a resin modified by melting and kneading in the presence of a peroxide was analyzed, reveals that a low peak appeared on the left of the highest peak in Comparative Example 4. This low peak is thought to be attributable to a high-molecular-weight component resulting from the modification by the melting and kneading. In Example 1 (solid line), where a resin modified in an aqueous dispersion was analyzed, any peak indicating the presence of a high-molecular-weight component is not found unlike in Comparative Example 4, although there is a slight bulge on the left half of the highest peak. The values of the z-average molecular weight/weight-average molecular weight ratio in Example 1 and Comparative Example 4 are thought to reflect such a difference in peak shape.

(Example 13)

A resin composition was prepared by mixing 100 parts by weight of the polyester resin (A-2) obtained in Example 2, 0.5 parts by weight of the lubricant (BA), and 0.5 parts by weight of the lubricant (EA) and was subjected to evaluation of the melt viscosity and the drawdown time. Blown film molding was also performed using the resin composition, and the blow-up ratio and the occurrence of foreign materials in the film were evaluated. The evaluation results are shown in Table 2.

(Example 14)

A resin composition was prepared by mixing 10 parts by weight of the modified aliphatic polyester resin (A-1) obtained in Example 1, 90 parts by weight of PHBH-1 as an unmodified P3HA (B), 0.5 parts by weight of the lubricant (BA), and 0.5 parts by weight of the lubricant (EA) and was subjected to evaluation of the melt viscosity and the drawdown time. Blown film molding was also performed using the resin composition, and the blow-up ratio and the occurrence of foreign materials in the film were evaluated. The evaluation results are shown in Table 2.

(Examples 15 and 16)

A resin composition was prepared and subjected to evaluation of the melt viscosity and the drawdown time in the same manner as in Example 14, except that the amount of the modified aliphatic polyester resin (A-1) obtained in Example 1 and the amount of the unmodified P3HA (B) were changed as shown in Table 2. Blown film molding was also performed using the resin composition, and the blow-up ratio and the occurrence of foreign materials in the film were evaluated. The evaluation results are shown in Table 2.

(Example 17)

A resin composition was prepared and subjected to evaluation of the melt viscosity and the drawdown time in the same manner as in Example 14, except that the modified aliphatic polyester resin (A-5) obtained in Example 5 and the unmodified P3HA (B) were used in the proportions shown in Table 2. Blown film molding was also performed using the resin composition, and the blow-up ratio and the occurrence of foreign materials in the film were evaluated. The evaluation results are shown in Table 2.

(Example 18)

A resin composition was prepared and subjected to evaluation of the melt viscosity and the drawdown time in the same manner as in Example 13, except that 100 parts by weight of the modified aliphatic polyester resin (A-7) obtained in Example 7 was used. Blown film molding was also performed using the resin composition, and the blow-up ratio and the occurrence of foreign materials in the film were evaluated. The evaluation results are shown in Table 2.

(Example 19)

A resin composition was prepared and subjected to evaluation of the melt viscosity and the drawdown time in the same manner as in Example 14, except that the modified aliphatic polyester resin (A-8) obtained in Example 8 and the unmodified P3HA (B) were used in the proportions shown in Table 2. Blown film molding was also performed using the resin composition, and the blow-up ratio and the occurrence of foreign materials in the film were evaluated. The evaluation results are shown in Table 2.

(Example 20)

A resin composition was prepared and subjected to evaluation of the melt viscosity and the drawdown time in the same manner as in Example 13, except that 100 parts by weight of the modified aliphatic polyester resin (A-9) obtained in Example 9 was used. Blown film molding was also performed using the resin composition, and the blow-up ratio and the occurrence of foreign materials in the film were evaluated. The evaluation results are shown in Table 2.

(Example 21)

A resin composition was prepared and subjected to evaluation of the melt viscosity and the drawdown time in the same manner as in Example 14, except that the modified aliphatic polyester resin (A-10) obtained in Example 10 and the unmodified P3HA (B) were used in the proportions shown in Table 2. Blown film molding was also performed using the resin composition, and the blow-up ratio and the occurrence of foreign materials in the film were evaluated. The evaluation results are shown in Table 2.

(Comparative Example 8)

A resin composition was prepared by mixing the unmodified P3HA (B), the lubricant (BA), and the lubricant (EA) in the proportions shown in Table 2 without using any modified aliphatic polyester resin and was subjected to evaluation of the melt viscosity and the drawdown time. Blown film molding was also performed using the resin composition, and the blow-up ratio and the occurrence of foreign materials in the film were evaluated. The evaluation results are shown in Table 2.

(Comparative Example 9)

A resin composition was prepared and subjected to evaluation of the melt viscosity and the drawdown time in the same manner as in Example 13, except that the modified aliphatic polyester resin (C-1) obtained in Comparative Example 4 was used. Blown film molding was also performed using the resin composition, and the blow-up ratio and the occurrence of foreign materials in the film were evaluated. The evaluation results are shown in Table 2.

(Comparative Example 10)

A resin composition was prepared and subjected to evaluation of the melt viscosity and the drawdown time in the same manner as in Example 13, except that the modified aliphatic polyester resin (C-2) obtained in Comparative Example 5 was used. Blown film molding was also performed using the resin composition, and the blow-up ratio and the occurrence of foreign materials in the film were evaluated. The evaluation results are shown in Table 2.

(Comparative Example 11)

A resin composition was prepared and subjected to evaluation of the melt viscosity and the drawdown time in the same manner as in Example 13, except that the modified aliphatic polyester resin (C-3) obtained in Comparative Example 6 was used. Blown film molding was also performed using the resin composition, and the blow-up ratio and the occurrence of foreign materials in the film were evaluated. The evaluation results are shown in Table 2.

[Table 2]

| | | Ex. 13 | Ex. 14 | Ex. 15 | Ex. 16 | Ex. 17 | Ex. 18 | Ex. 19 | Ex. 20 | Ex. 21 | Comp. 8 | Comp. 9 | Comp. 10 | Comp. 11 |
|---|---|---|---|---|---|---|---|---|---|---|---|---|---|---|
| Unmodified P3HA (B) [parts by weight] | PHBH-1 | 0 | 90 | 70 | 50 | 50 | 0 | 90 | 0 | 90 | 100 | - | - | - |
| Modified P3HA (A) of the present disclosure [parts by weight] | A-1 (Ex. 1) | | 10 | 30 | 50 | | | | | | | | | |
| | A-2 (Ex. 2) | 100 | | | | | | | | | | | | |
| | A-5 (Ex. 5) | | | | | 50 | | | | | | | | |
| | A-7 (Ex. 7) | | | | | | 100 | | | | | | | |
| | A-8 (Ex. 8) | | | | | | | 10 | | | | | | |
| | A-9 (Ex. 9) | | | | | | | | 100 | | | | | |
| | A-10 (Ex. 10) | | | | | | | | | 10 | | | | |
| Modified P3HA for comparison [parts by weight] | C-1 (Comp. 4) | | | | | | | | | | | 100 | | |
| | C-2 (Comp. 5) | | | | | | | | | | | | 100 | |
| | C-3 (Comp. 6) | | | | | | | | | | | | | 100 |
| Lubricant [parts by weight] | BA | 0.5 | 0.5 | 0.5 | 0.5 | I 0.5 | 0.5 | 0.5 | 0.5 | 0.5 | 0.5 | 0.5 | 0.5 | 0.5 |
| | EA | 0.5 | 0.5 | 0.5 | 0.5 | 0.5 | 0.5 | 0.5 | 0.5 | 0.5 | 0.5 | 0.5 | 0.5 | 0.5 |
| Apparent melt viscosity [η] | Pa•s | 1230 | 1230 | 1630 | 1750 | 1150 | 1230 | 1230 | 1220 | 1230 | 1140 | 1270 | 1470 | 1760 |
| Drawdown time [DT] | sec | 40 | 40 | 53 | 58 | 56 | 40 | 40 | 39 | 40 | 18 | 42 | 39 | 47 |
| DT/η | sec/[Pa•s] | 3.3E-02 | 3.3E-02 | 3.3E-02 | 3.3E-02 | 4.9E-02 | 3.3E-02 | 3.3E-02 | 3.2E-02 | 3.3E-02 | 1.6E-02 | 3.3E-02 | 2.6E-02 | 2.7E-02 |
| Blow-up ratio | times | 2.5 | 2.5 | 3.0 | 3.5 | 3.5 | 2.5 | 2.5 | 2.5 | 2.5 | 1.5 | 2.5 | 2.5 | 3.0 |

24

| | | Ex. 13 | Ex. 14 | Ex. 15 | Ex. 16 | Ex. 17 | Ex. 18 | Ex. 19 | Ex. 20 | Ex. 21 | Comp. 8 | Comp. 9 | Comp. 10 | Comp. 11 |
|---|---|---|---|---|---|---|---|---|---|---|---|---|---|---|
| Foreign materials in film | | Good | Good | Good | Good | Good | Good | Good | Good | Good | Good | Poor | Poor | Poor |

Table 2 reveals the following findings. For the resin compositions of Examples 13, 18, and 20 which contained the modified aliphatic polyester resin (A) and the resin compositions of Examples 14 to 17, 19, and 21 which contained the modified aliphatic polyester resin (A) and the unmodified poly(3-hydroxyalkanoate) resin (B), the drawdown time/melt viscosity ratio was in the range of $2.0 \times 10^{-2}$ to $5.0 \times 10^{-1}$ (sec/[Pa•s]), the blow-up ratio was as high as 2.5 times or more, and the stability of the molding process was high. Additionally, the number of foreign materials found in the film was not greater than in Comparative Example 8.

In Comparative Example 8, where the resin composition did not contain any modified aliphatic polyester resin but consisted only of the unmodified poly(3-hydroxyalkanoate) (B), the blow-up ratio was as low as 1.5 times and the stability of the molding process was low. In Comparative Examples 9 to 11, where the resin composition contained an aliphatic polyester resin modified by melting and kneading in the presence of a peroxide as described in Patent Literature 2 or 3, the blow-up ratio was high, but the number of foreign materials found in the film was greater than in Examples 13 to 21 and Comparative Example 8.

**Claims**

1.  A modified aliphatic polyester resin (A) comprising a poly(3-hydroxyalkanoate) resin, wherein

    a ratio between a melt viscosity (Pa•s) and a drawdown time (sec) is from $2.0 \times 10^{-2}$ to $5.0 \times 10^{-1}$ (sec/[Pa•s]),
    a z-average molecular weight/weight-average molecular weight ratio is less than 10,
    the melt viscosity is an apparent melt viscosity ($\eta$) calculated by the following equation (1) using a load (F) measured with a capillary rheometer during extrusion in which a melt of the modified aliphatic polyester resin (A) is extruded at a volume flow rate (Q) of 0.716 cm$^3$/min and a shear rate of 122 sec$^{-1}$ from an orifice having a radius (d) of 0.05 cm and a capillary length (l) of 1 cm and connected to a tip of a barrel having a barrel set temperature of 170°C and a radius (D) of 0.4775 cm:

    $$\text{(Equation 1)} \quad \eta = \frac{\pi \left( F/_{\pi D^2} \right) d^4}{8Ql} \quad ,$$

    and
    the drawdown time is a time taken for the modified aliphatic polyester resin (A) to fall 20 cm after being discharged from the orifice in measurement of the melt viscosity.

2.  The modified aliphatic polyester resin (A) according to claim 1, wherein the melt viscosity is from 500 to 3000 (Pa•s).

3.  The modified aliphatic polyester resin (A) according to claim 1 or 2, wherein the drawdown time is from 30 to 200 (sec).

4.  The modified aliphatic polyester resin (A) according to claim 1 or 2, wherein the z-average molecular weight/weight-average molecular weight ratio is less than 3.

5.  The modified aliphatic polyester resin (A) according to claim 1 or 2, wherein the poly(3-hydroxyalkanoate) resin is at least one selected from the group consisting of poly(3-hydroxybutyrate-co-3-hydroxyvalerate), poly(3-hydroxybutyrate-co-3-hydroxyhexanoate), poly(3-hydroxybutyrate-co-3-hydroxyvalerate-co-3-hydroxyhexanoate), poly(3-hydroxybutyrate-co-4-hydroxybutyrate), poly(3-hydroxybutyrate-co-3-hydroxyoctanoate), and poly(3-hydroxybutyrate-co-3-hydroxydecanoate).

6.  The modified aliphatic polyester resin (A) according to claim 1 or 2, wherein the poly(3-hydroxyalkanoate) resin is a resin modified using a peroxide.

7.  The modified aliphatic polyester resin (A) according to claim 6, wherein an amount of the peroxide used is from 0.1 to 10 parts by weight per 100 parts by weight of the poly(3-hydroxyalkanoate) resin.

8.  The modified aliphatic polyester resin (A) according to claim 6, wherein the peroxide is a compound having a one-minute half-life temperature of 140°C or lower.

9.  The modified aliphatic polyester resin (A) according to claim 6, wherein the peroxide is di-n-propyl peroxydicarbonate, diisopropyl peroxydicarbonate, di-sec-butyl peroxydicarbonate, bis(4-t-butylcyclohexyl) peroxydicarbonate, bis(2-ethylhexyl) peroxydicarbonate, *t*-butyl peroxy-2-ethylhexanoate, *t*-butyl peroxyisobutyrate, *t*-hexyl peroxy-2-ethylhexanoate, 1,1,3,3-tetramethylbutyl peroxy-2-ethylhexanoate, *t*-butyl peroxypivalate, *t*-hexyl peroxypivalate, *t*-butyl peroxyneodecanoate, *t*-hexyl peroxyneodecanoate, or 1,1,3,3-tetramethylbutyl peroxyneodecanoate.

10. The modified aliphatic polyester resin (A) according to claim 1 or 2, wherein a gel fraction is 10% or less.

11. An aliphatic polyester resin composition comprising the modified aliphatic polyester resin (A) according to claim 1.

12. The aliphatic polyester resin composition according to claim 11, further comprising an unmodified poly(3-hydroxyalkanoate) resin (B).

13. A molded article produced by molding the modified aliphatic polyester resin (A) according to claim 1 or the aliphatic polyester resin composition according to claim 11.

14. The molded article according to claim 13, wherein the molded article is a sheet, a film, a blown bottle, an extrusion-molded article, a vacuum-molded article, or an injection-molded article.

Fig.1

Comp. 4
(Modified by melt extrusion)

Ex. 1

Comp. 1
(Unmodified)

**GPC retention time [min]**

## INTERNATIONAL SEARCH REPORT

International application No.

**PCT/JP2022/048664**

### A. CLASSIFICATION OF SUBJECT MATTER

*C08G 63/91*(2006.01)i; *C08G 63/06*(2006.01)i; *C08L 67/04*(2006.01)i
FI:  C08G63/91; C08G63/06; C08L67/04

According to International Patent Classification (IPC) or to both national classification and IPC

### B. FIELDS SEARCHED

Minimum documentation searched (classification system followed by classification symbols)

  C08G63/91; C08G63/06; C08L67/04

Documentation searched other than minimum documentation to the extent that such documents are included in the fields searched

  Published examined utility model applications of Japan 1922-1996
  Published unexamined utility model applications of Japan 1971-2023
  Registered utility model specifications of Japan 1996-2023
  Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2019/022008 A1 (KANEKA CORPORATION) 31 January 2019 (2019-01-31) claims, paragraphs [0047], [0063]-[0065], examples, comparative examples | 1-14 |
| A | JP 2008-56851 A (TOYO SEIKAN KAISHA LTD) 13 March 2008 (2008-03-13) claims, examples | 1-14 |
| A | US 2008/0182193 A1 (XEROX CORPORATION) 31 July 2008 (2008-07-31) claims, examples | 1-14 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 January 2023** | **07 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/048664**

| Patent document cited in search report | | | Publication date (day/month/year) | Patent family member(s) | | | Publication date (day/month/year) |
|---|---|---|---|---|---|---|---|
| WO | 2019/022008 | A1 | 31 January 2019 | US 2020/0181397 A1 claims, paragraphs [0051], [0073]-[0075], examples, comparative examples EP 3660096 A1 CN 110869443 A | | | |
| JP | 2008-56851 | A | 13 March 2008 | (Family: none) | | | |
| US | 2008/0182193 | A1 | 31 July 2008 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6201083 B
- WO 2019022008 A
- JP 2020122062 A
- WO 2014020838 A
- WO 2019146555 A
- WO 2021002092 A

**Non-patent literature cited in the description**

- **T. FUKUI** ; **Y. DOI**. *J. Bacteriol.,*, 1997, vol. 179, 4821-4830